# EUROPEAN PATENT SPECIFICATION

(11) **EP 4 575 971 B1**
(45) Date of publication and mention of the grant of the patent: **02.12.2026**
(21) Application number: 23947686.4
(22) Date of filing: 31.07.2023
(51) Int. Cl.: G06Q 50/40, B60W 60/00, G06Q 50/10, G06T 11/00, G06T 15/10, G06T 17/05, G06T 19/00

(54) **RIDE-HAILING SERVICE PROVISION METHOD, RIDE-HAILING SERVICE PROVISION SYSTEM, AND AR SERVICE PROVISION DEVICE INTERWORKING THEREWITH**
FAHRHILFEDIENSTBEREITSTELLUNGSVERFAHREN, FAHRHILFEDIENSTBEREITSTELLUNGSSYSTEM UND DAMIT ZUSAMMENARBEITENDE AR-DIENSTBEREITSTELLUNGSVORRICHTUNG
PROCÉDÉ DE FOURNITURE DE SERVICE DE VOITURAGE, SYSTÈME DE FOURNITURE DE SERVICE DE VOITURAGE, ET DISPOSITIF DE FOURNITURE DE SERVICE DE RA EN INTERFONCTIONNEMENT AVEC CELUI-CI

(43) Date of publication of application: 25.06.2025
(73) Proprietor: LG Electronics Inc., Yeongdeungpo-gu Seoul 07336 (KR)
(72) Inventor: CHOI, Sunghwan, Seoul 06772 (KR); KIM, Taekyoung, Seoul 06772 (KR); LEE, Heemin, Seoul 06772 (KR); SEO, Jungryul, Seoul 06772 (KR)
(74) Representative: Vossius & Partner Patentanwälte Rechtsanwälte mbB
(86) International application number: PCT/KR2023/011161
(87) International publication number: WO 2025/028681

(56) References cited:
- JP-A- 2021 519 989
- KR-A- 20190 100 109
- KR-A- 20190 106 845
- KR-B1- 101 917 316
- KR-B1- 101 917 316
- KR-B1- 102 382 117
- KR-B1- 102 382 117

## Description

### Technical Field

The present disclosure relates to a method of providing a vehicle calling service, a system for providing a vehicle calling service, and an AR service provision device that operates in conjunction with the method and the system. More particularly, the present disclosure relates to a method of providing a vehicle calling service, a system for providing a vehicle calling service, and an AR service provision device that operates in conjunction with the method and the system, all of which are capable of providing vehicle calling, authentication, and location designation services through mutual interactions between an unmanned vehicle and a passenger terminal.

### Background Art

Vehicles are apparatuses designed to move in a desired direction under the control of a user or autonomously. A typical example of a vehicle is an automobile.

For the convenience of the user who uses the vehicle, there is a trend for vehicles to be equipped with various sensors and electronic devices. Particularly, for the convenience of the user, research on Advanced Drive Assistance Systems (ADAS) has been actively conducted. Moreover, research on autonomous traveling vehicles has been actively conducted.

In recent years, UI/UX and services that assist vehicles in traveling have been actively developed using technologies such as augmented reality (hereinafter referred to as AR), virtual reality (hereinafter referred to as VR), and mixed reality (MR) which combines AR and VR.

The utilization of the MR technology provides various advantages: offering a variety of information necessary for vehicles to travel based on the actual real world, providing various interfaces related to vehicle traveling in a virtual world (or a Digital Twin) closely resembling the real world, and delivering information and content in various fields, including vehicle traveling, to vehicle occupants.

In recent years, there has been a growing market for transportation services provided to passengers by enabling unmanned vehicles, defined by unmanned autonomous taxis or robot taxis, to travel autonomously. In the case of the transportation services that use unmanned vehicles, research on interactions with passengers needs to be conducted in various ways because human drivers are not present to board the unmanned vehicles.

In the related art, a variety of interactions and communications occur across different stages, including before, during, and after a human driver boards a vehicle. Specifically, from the passenger's perspective, there is a need to adapt these interactions and communications, taking into consideration the features of the unmanned vehicle.

For example, in the related art, after a passenger designates a vehicle boarding location, a called vehicle approaches the appointed vehicle boarding location and comes to a stop. Then, the passenger checks the license plate number or the brand name with the naked eye and decides to board. In addition, after boarding, the passenger can easily verify the called vehicle through a brief conversation with the called vehicle.

However, although the passenger verifies the called vehicle through the license plate number and the brand name and then boards the called vehicle, additionally, the unmanned vehicle also needs to authenticate whether or not the passenger is the person who called the vehicle. In addition, the passenger feels more anxious about whether or not the unmanned vehicle will safely travel to the destination set by the passenger.

In addition, in a case where the called vehicle has difficulty approaching the appointed vehicle boarding location because the vicinity thereof is congested, such as at an airport, there arises a problem in that it is difficult to identify the called vehicle with the naked eye and easily change the appointed vehicle boarding location using gestures or similar methods, if available.

KR 102 3 82 117 B1 discloses a system for providing vehicle riding point information using augmented reality, with the aim of helping a user and a driver accurately grasp a position of a getting on/off point.

KR 101 917 316 B1 relates to a technology where a guardian monitors a passenger boarding or alighting an autonomous vehicle.

### Disclosure of Invention

### Technical Problem

Objects of the present disclosure are to address the above-mentioned problems and other related problems.

One object of one or several embodiments of the present disclosure is to provide a method of providing a vehicle calling service, a system for providing a vehicle calling service, and an AR service provision device that operates in conjunction with the method and the system, all of which are capable of making adjustments through mutual recognition and interactions between a passenger and an unmanned vehicle using AR and MR technologies when the unmanned vehicle called by the passenger approaches a predetermined distance from an appointed location.

Another object of one or several embodiments of the present disclosure is to provide a method of providing a vehicle calling service, a system for providing a vehicle calling service, and an AR service provision device that operates in conjunction with the method and the system, all of which are capable of enabling a passenger who called a vehicle to accurately recognize the called vehicle and additionally enabling the called vehicle to accurately recognize the passenger, thereby performing automatic authentication and providing an accurate vehicle boarding service.

A further object of one or several embodiments of the present disclosure is to provide a method of providing a vehicle calling service, a system for providing a vehicle calling service, and an AR service provision device that operates in conjunction with the method and the system, all of which are capable of providing a location appropriate for vehicle boarding or alighting and accurately designating the location using AR and MR technologies in a case where a vehicle boarding location or a vehicle alighting location, which is appointed by a passenger, is deemed inappropriate as a vehicle boarding or alighting location.

Another object of one or several embodiments of the present disclosure is to provide a method of providing a vehicle calling service, a system for providing a vehicle calling service, and an AR service provision device that operates in conjunction with the method and the system, all of which are capable of interacting with a second passenger waiting at a stopover using AR and MR technologies in such a manner that an unmanned vehicle can recognize an accurate location of the stopover designated by a first passenger, in a case where the first passenger designates the stopover.

### Solution to Problem

In order to accomplish the above-mentioned objects, according to one aspect of the present disclosure, there is provided a system for providing a vehicle service includes an AR service provision device and a service platform that operates in conjunction with the AR service provision device.

In the system, the AR service provision device renders an AR image, which is based on location information and vehicle information of a called vehicle, onto the called vehicle and displays the resulting AR image on a three-dimensional map. In the system, in response to the called vehicle entering a vehicle boarding-possible section based on location information of a passenger, the service platform that operates in conjunction with the AR service provision device requests the called vehicle to inclusively image-capture a plurality of candidate passengers, using a camera in the called vehicle and to generate a plurality of thumbnails, and provides an user interface for selection one from among the plurality of generated thumbnails to the AR service provision device. Moreover, the service platform transmits information about the thumbnail selected by the AR service provision device to the called vehicle and enables the called vehicle to track location of a candidate passenger.

According to an embodiment, in the vehicle boarding-possible section, an image-capturing range of the camera provided in the called vehicle and an image-capturing range of a camera provided in the AR service provision device may fall within a distance range where the called vehicle and the AR service provision device are able to image-capture each other.

According to an embodiment, at the time of vehicle calling, the service platform may transmit additional information, input from the AR service provision device, to the called vehicle, and enable the called vehicle to extract a region related to the additional information from an image captured by the camera in the called vehicle, and to generate the plurality of thumbnails, with the extracted region being included.

According to an embodiment, the AR service provision device may receive a selection input applied to one of the plurality of thumbnails using the user interface, and the service platform may transmit an ID and features of a thumbnail that correspond to the selection input and enable the called vehicle to recognize a candidate passenger, corresponding to the transmitted ID of the thumbnails, and to track location of the recognized location based on the features.

According to an embodiment, in response to the selection input, the AR service provision device may change a first AR image, which is based on the location information and vehicle information of the called vehicle, to a second AR image, which is based on customizing information of the passenger, and render the resulting second AR image onto the called vehicle.

According to an embodiment, in response to a selection-impossible applied to the plurality of thumbnails, the service platform may transmit an image-recapturing command to the called vehicle and enable the called vehicle to provide a thumbnail, corresponding to the image-recapturing command, to the AR service provision device.

According to an embodiment, in response to the called vehicle coming to a stop, the service platform may enable the called vehicle to compare first features, corresponding to the thumbnail corresponding to the selection input, and second features acquired from a captured image of the candidate passenger approaching a door of the called vehicle and to perform passenger authentication.

According to an embodiment, in response to the called vehicle determining, as a result of the comparison, that the similarity between the first features and the second features reaches or exceeds a reference value, the service platform may enable the called vehicle to perform an operation related to guiding the passenger in vehicle boarding.

According to an embodiment, in response to the called vehicle determining, as a result of the comparison, that the similarity between the first features and the second features does not reach a reference value, the service platform may enable the called vehicle to perform an operation related to passenger mismatch, and may transmit vehicle arrival guidance information to the AR service provision device.

According to another aspect of the present disclosure, there is provided a method of providing a vehicle calling service, the method including: a step of acquiring location information of a called vehicle; a step of rendering an AR image, which is based on location information and vehicle information of the called vehicle, onto the called vehicle and displaying the resulting AR image on a three-dimensional map; a step of determining that the called vehicle onto which the AR image is rendered enters a vehicle boarding-possible section; a step of requesting the called vehicle to inclusively image-capture a plurality of candidate passengers, using a camera in the called vehicle and to generate a plurality of thumbnails; a step of providing a user interface for selecting one from among the plurality of generated thumbnails to the AR service provision device; and a step of transmitting information about the thumbnail selected by the AR service provision device to the called vehicle and enabling the called vehicle to track location of a candidate passenger.

### Advantageous Effects of Invention

The effects of a method of providing a vehicle calling service, a system for providing a vehicle calling service, and an AR service provision device for the method and the system are described as follows.

A method of providing a vehicle calling service, a system for providing a vehicle calling service, and an AR service provision device for the method and the system, according to embodiments of the present disclosure, enable seamless remote interactions between an unmanned vehicle and a passenger who has not yet boarded the unmanned vehicle. Furthermore, in terms of convenience, mutual recognition enhances vehicle boarding authentication and facilitates changes to a vehicle boarding or alighting location.

In addition, according to the embodiments of the present disclosure, the passenger can accurately identify a called vehicle, and the called vehicle also specifies and authenticates the passenger in advance through a thumbnail selected by the passenger before boarding. This can facilitate interaction and authentication, enabling the unmanned vehicle to provide high-quality services, such as accurately guiding the passenger in vehicle boarding.

In addition, according to the embodiments of the present disclosure, in a case where the vehicle boarding or alighting location, appointed by the passenger, is deemed inappropriate as the vehicle boarding or alighting location, the location appropriate for boarding or alighting can be accurately displayed using AR and MR technologies, and a traveling path, resulting from the change, can be intuitively recognized.

In addition, according to one or several of the embodiments of the present disclosure, in a case where the first passenger designates a stopover, the second passenger can also provide the location of the stopover. In a situation where the first passenger does not know the second passenger, riding-sharing can also be seamlessly facilitated using the AR and MR technologies.

### Brief Description of Drawings

FIG. 1 is a view illustrating a vehicle related to an embodiment of the present disclosure.
FIG. 2 is a view illustrating the vehicle related to the embodiment of the present disclosure, when viewed from various angles.
FIGS. 3 and 4 are views, each illustrating the interior of the vehicle related to the embodiment of the present disclosure.
FIGS. 5 and 6 are views that are referenced to describe various objects related to the traveling of the vehicle related to the embodiment of the present disclosure.
FIG. 7 is a block diagram that is referenced to describe both the vehicle related to the embodiment of the present disclosure and an AR service provision device.
FIG. 8 is a diagram illustrating the detailed configurations of both a system for providing a vehicle calling service related to an embodiment of the present disclosure and an AR service provision device.
FIGS. 9A and 9B are views that are referenced to describe a distance condition related to vehicle calling related to an embodiment of the present disclosure.
FIGS. 10A, 10B, 10C, 10D, and 10E are views illustrating various examples, respectively, in which the location and traveling of the called vehicle related to an embodiment of the present disclosure are displayed using an MR map view, thereby guiding a passenger in vehicle boarding.
FIG. 11 is a flowchart that is referenced to describe a method of determining and authenticating a passenger who called a vehicle using a thumbnail related to an embodiment of the present disclosure.
FIGS. 12 and 13 are views that are referenced to describe a process in which a vehicle related to an embodiment of the present disclosure generates and provides thumbnails of candidate passengers.
FIG. 14 is a view that is referenced to describe a process in which, in the AR service provision device related to an embodiment of the present disclosure, the passenger who called the vehicle is selected using the thumbnail.
FIG. 15 is a flowchart that is referenced to describe a method of generating a thumbnail based on prior information of the passenger who called the vehicle related to an embodiment of the present disclosure.
FIG. 16 is a flowchart that is referenced to describe a method of authenticating the passenger who called the vehicle based on the features of the selected thumbnail related to an embodiment of the present disclosure.
FIG. 17 is a flowchart that is referenced to describe a method of guiding toward and selecting a vehicle boarding location using three-dimensional map information related to an embodiment of the present disclosure.
FIGS. 18 and 19 are views that are referenced to describe a recommendation of a vehicle boarding location or a vehicle alighting location based on information about the attribute of difficulty in boarding or alighting, respectively, the vehicle related to an embodiment of the present disclosure.
FIG. 20 is a view that is referenced to describe a method of selecting a direction for alighting the vehicle using a highlighted structure on the three-dimensional map related to the embodiment of the present disclosure.
FIG. 21 is a view that is referenced to describe a method of changing a path for the vehicle using the three-dimensional map information related to the embodiment of the present disclosure.
FIGS. 22 and 23 are a flowchart and a view, respectively, that are referenced to describe the provision of location information of a stopover using the three-dimensional map information related to the embodiment of the present disclosure.
FIG. 24 is a view that is referenced to describe the displaying of a ridesharing applicant through the use of the three-dimensional map information related to the embodiment of the present disclosure.

### Mode for the Invention

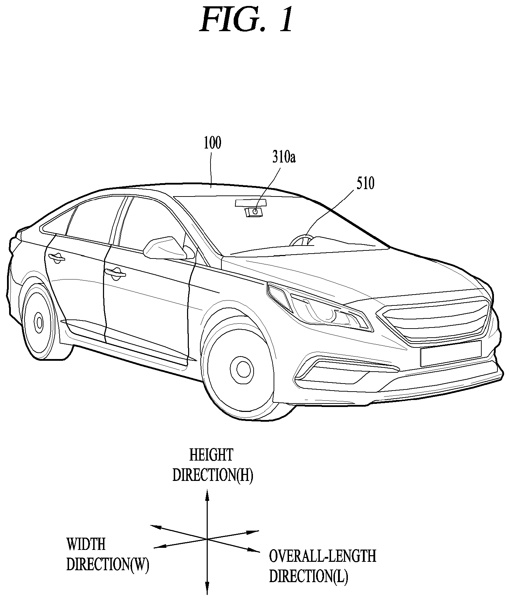

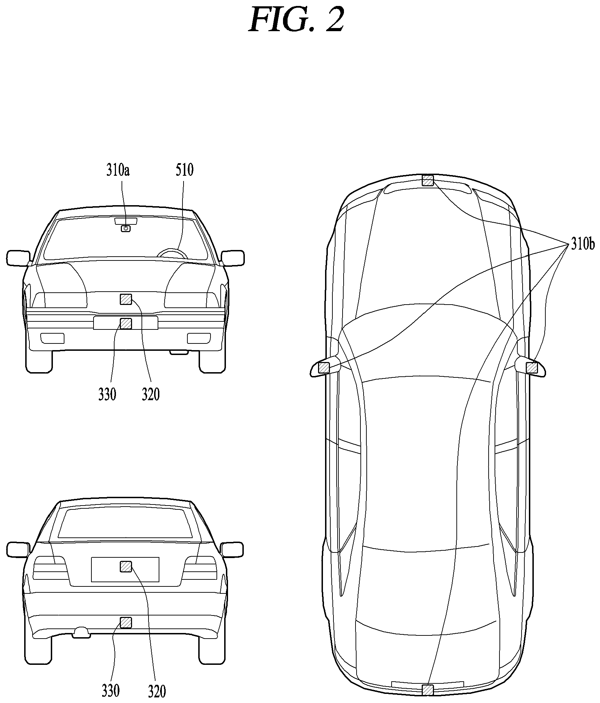

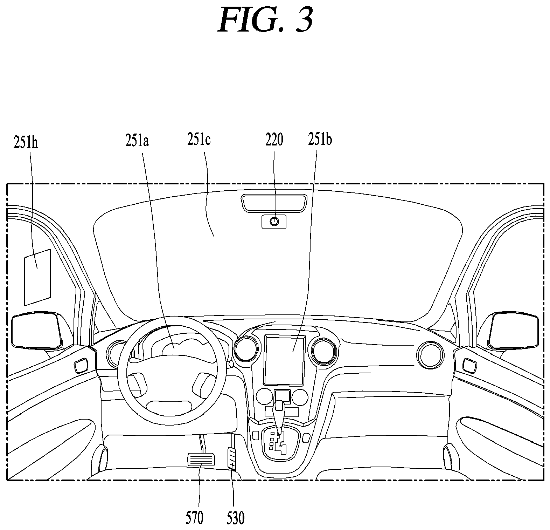

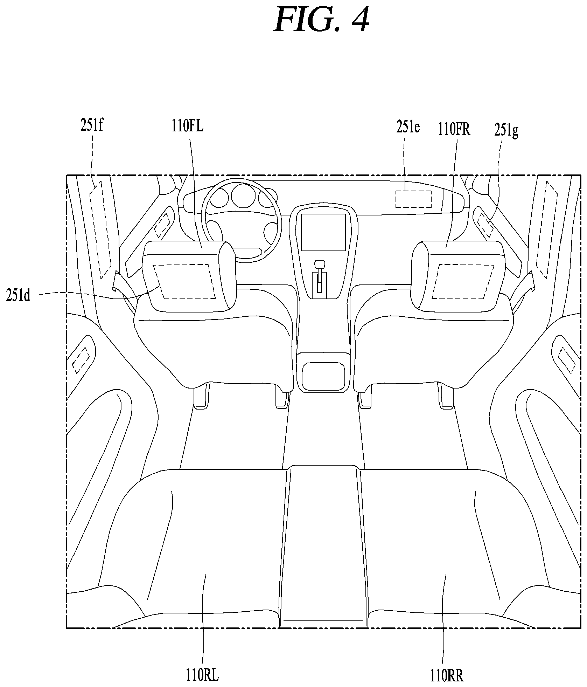

FIGS. 1 and 2 are views, each illustrating the exterior appearance of a vehicle related to an embodiment of the present disclosure. FIGS. 3 and 4 are views, each illustrating the interior of the vehicle related to the embodiment of the present disclosure.

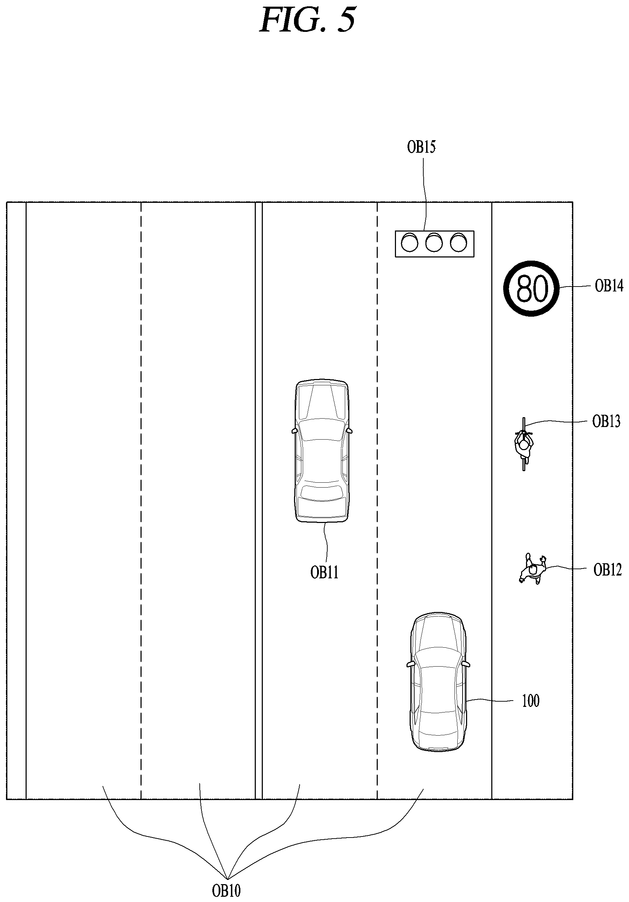

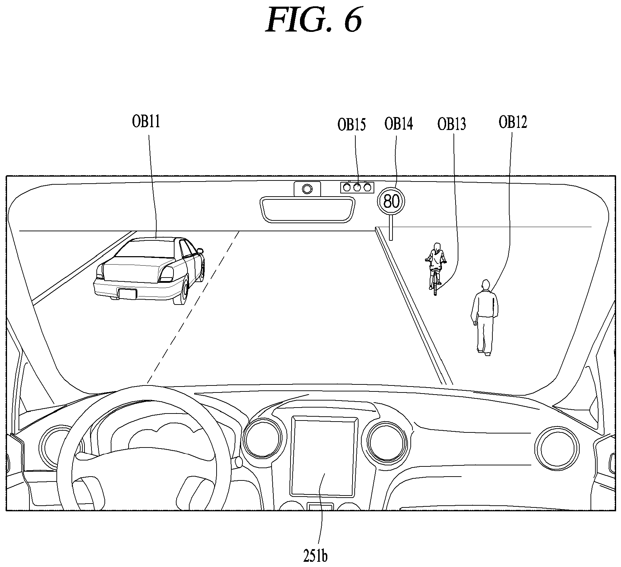

FIGS. 5 and 6 are views, each illustrating objects related to traveling of the vehicle related to the embodiment of the present disclosure.

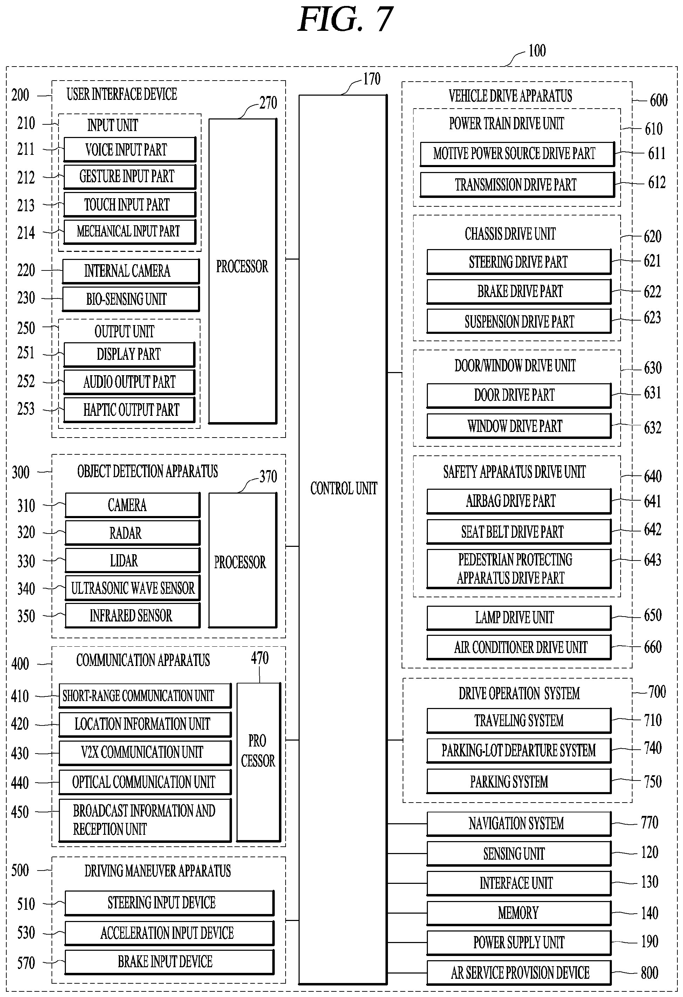

FIG. 7 is a block diagram that is referenced to describe the vehicle related to the embodiment of the present disclosure.

With reference to FIGS. 1 to 7, a vehicle 100 may include wheels rotated by a motive power source, and a steering input device 510 for adjusting the traveling direction of the vehicle 100.

The vehicle 100 may be an autonomous traveling vehicle. The vehicle 100 may switch to an autonomous traveling mode or a manual mode on the basis of user input. For example, the vehicle 100 may switch from the manual mode to the autonomous traveling mode or from the autonomous traveling mode to the manual mode on the basis of a user input received through a user interface device 200 (which may be hereinafter referred to as a 'user terminal')

The vehicle 100 may switch to the autonomous traveling mode or the manual mode on the basis of traveling situation information. The traveling situation information may be generated on the basis of object information provided by an object detection apparatus 300. For example, the vehicle 100 may switch from the manual mode to the autonomous traveling mode or from the autonomous traveling mode to the manual mode on the basis of the traveling situation information generated by the object detection apparatus 300. For example, the vehicle 100 may switch from the manual mode to the autonomous traveling mode or from the autonomous traveling mode to the manual mode on the basis of the traveling situation information received through a communication apparatus 400.

The vehicle 100 may switch from the manual mode to the autonomous traveling mode or from the autonomous traveling mode to the manual mode on the basis of information, data, and signals, all of which are provided by an external device.

In a case where the vehicle 100 operates to drive in the autonomous traveling mode, the autonomous traveling vehicle 100 may operate to drive under the control of a drive operation system 700. For example, the vehicle 100 may operate to drive on the basis of information, data, and signals, all of which are generated by a traveling system 710, a parking-lot departure system 740, and a parking system 750.

In a case where the vehicle 100 operates to drive in the manual mode, the autonomous traveling vehicle 100 may receive user input for driving through a driving maneuver apparatus 500. The vehicle 100 may operate to drive on the basis of the user input received through the driving maneuver apparatus 500.

An overall length refers to a length from the front end of the vehicle 100 to the rear end thereof. A width refers to the breadth of the vehicle 100. A height refers to a length from the lower end of the wheel of the vehicle 100 to the roof of the vehicle 100. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (which may be hereinafter referred to as a 'user terminal') 200, the object detection apparatus 300, the communication apparatus 400, the driving maneuver apparatus 500, a vehicle drive apparatus 600, the drive operation system 700, a navigation system 770, a sensing unit 120, a vehicle interface unit 130, a memory 140, a control unit 170, and a power supply unit 190.

According to an embodiment, the vehicle 100 may include one or more constituent elements in addition to the constituent elements described in the present specification and omit one or more of the described constituent elements.

The user interface device 200 may be a device for communication between the vehicle 100 and a user. The user interface device 200 may receive the user input and may provide generated by the vehicle 100 to the user. The vehicle 100 may realize a user interface (UI) or user experience (UX) through the user interface device (which may be hereinafter referred to as the 'user terminal') 200.

The user interface device 200 may include an input unit 210, an internal camera 220, a bio-sensing unit 230, an output unit 250, and a processor 270. According to an embodiment, the user interface device 200 may include one or more constituent elements in addition to constituent elements described in the present specification or may omit one or more of the described constituent elements.

The input unit 210 serves to receive information, as input, from the user. Data collected through the input unit 210 may be analyzed using the processor 270 and be processed as a control command by the user.

The input unit 210 may be arranged within the vehicle 100. For example, the input unit 210 may be arranged on one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a voice input from the user into an electric signal. The electric signal, resulting from the conversion, may be provided to the processor 270 or the control unit 170. The voice input part 211 may include at least one microphone.

The gesture input part 212 may convert a gesture input from the user into an electric signal. The electric signal, resulting from the conversion, may be provided to the processor 270 or the control unit 170.

The gesture input part 212 may include at least one of the following: an infrared sensor or an image sensor, either of which serves to detect the gesture input from the user. According to an embodiment, the gesture input part 212 may detect a three-dimensional (3D) gesture input from the user. To this end, the gesture input part 212 may include a light-emitting diode, which emits a plurality of infrared rays, or a plurality of image sensors.

The gesture input part 212 may detect the three-dimensional gesture input from the user through a time-of-flight (TOF) technique, a structured light technique, or a disparity technique.

The touch input part 213 may convert a touch input from the user into an electric signal. The electric signal, resulting from the conversion, may be provided to the processor 270 or the control unit 170.

The touch input part 213 may include a touch sensor for detecting the touch input from the user. According to an embodiment, the touch input part 213 may be integrally formed with a display part 251, thereby realizing a touch screen. This touch screen may provide both an input interface and an output interface between the vehicle 100 and the user.

The mechanical input part 214 may include at least one of the following: a bottom, a dome switch, a jog wheel, or a jog switch. An electric signal generated by the mechanical input part 214 may be provided to the processor 270 or the control unit 170. The mechanical input part 214 may be arranged on a steering wheel, a center fascia, a center console, a cockpit module, a door, and the like.

The internal camera 220 may acquire an image of the interior of the vehicle 100. The processor 270 may detect a user's state on the basis of the image of the interior of the vehicle 100. The processor 270 may acquire the user's gaze information from the image of the interior of the vehicle 100. The processor 270 may detect the user's gesture from the image of the interior of the vehicle 100.

The bio-sensing unit 230 may acquire the user's bio-information. The bio-sensing unit 230 may include a sensor for acquiring the user's bi-information and may acquire the user's fingerprint information, heart rate information, and the like using the sensor. The bi-information may be used for user authentication.

The output unit 250 serves to generate an output related to a sense of sight, a sense of hearing, or a sense of touch. The output unit 250 may include at least one of the following: the display part 251, an audio output part 252, or a haptic output part 253.

Graphic objects corresponding to various information may be displayed on the display part 251. The display part 251 may include at least one of the following: a liquid crystal display (LCD), a thin film transistor-LCD (TFT LCD), an organic light-emitting diode (OLED), a flexible display, a three-dimensional (3D) display, an e-ink display, or the like.

The display unit 251 may have a structure that is inter-layered with the touch input part 213 or be integrally formed with the touch input part 213 in order to realize a touch screen.

The display part 251 may be realized as a head-up display (HUD). In a case where the display part 251 may be idealized as the HUD, the display part 251 may be equipped with a projection module and thus may output information through an image that is projected onto a window shield or a window.

The display part 251 may include a transparent display. The transparent display may be attached to the windshield or the window. The transparent display may have a predetermined degree of transparency and may output a predetermined screen thereon. The transparent display may include at least one of the following: a thin film electroluminescent (TFEL), a transparent organic light-emitting diode (OLED), a transparent a liquid crystal display (LCD), a transmissive transparent display, a transparent light-emitting diode (LED) display, or the like. The transparent display may have adjustable transparency.

The user interface device 200 may include a plurality of display parts, for example, display parts 251a to 251g.

The display unit 251 may be arranged on one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be realized on one region 251c of the windshield or one region 251h of the window.

The audio output part 252 may convert an electric signal, provided from the processor 270 or the control unit 170, into an audio signal. To this end, the audio output part 252 may include at least one speaker.

The haptic output part 253 may generate a haptic output. For example, the haptic output part 253 may operate to vibrate the steering wheel, the safety belt, and the seats 110FL, 110FR, 110RL, and 110RR, thereby enabling the user to recognize the vibration output.

The processor (which may be referred to as the 'control unit' 270) may control the overall operation of each unit of the user interface device 200. According to an embodiment, the user interface device 200 may include a plurality of processors 270 or may also not include any processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display device. The user interface device 200 may operate under the control of the control unit 170.

The object detection apparatus 300 is an apparatus for detecting an object located outside the vehicle 100. Examples of the object may include a variety of things related to the drive operation of the vehicle 100. With reference to FIGS. 5 and 6, examples of an object O may include a traffic lane OB10, a different vehicle OB11, a pedestrian OB12, a two-wheeled vehicle OB13, traffic signs OB14, traffic lights OB15, ambient light, a road, a structure, a speed bump, a landmark, an animal, and the like.

The lane OB10 may be a traveling lane, a lane adjacent to the traveling lane, or a lane along which a vehicle facing the vehicle 100 travels. The lane OB10 may conceptually include the left and right boundary lines forming a lane.

The different vehicle OB11 may be a vehicle that travels in the vicinity of the vehicle 100. The different vehicle may be a vehicle located within a predetermined distance from the vehicle 100. For example, the different vehicle OB11 may be a vehicle travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a person-carrying vehicle that is located in the vicinity of the vehicle 100 and moves using two wheels. The two-wheeled vehicle OB12 may refer to a person-carrying vehicle that is located with a predetermined distance from the vehicle 100 and has two wheels. For example, the two-wheeled vehicle OB13 may be a motorcycle or a bicycle that is located on a sidewalk or roadway.

Examples of the traffic signals may include the traffic lights OB15, the traffic signs OB14, or a pattern or text that is drawn on the surface of a road.

The light may be light generated by a lamp provided in the different vehicle. The light may be light generated by a streetlight. The light may be solar light.

Examples of the road may include a road surface, a curved road, and an inclined road, such as a downward road or an upward road.

The structure may be a thing that is located in the vicinity of a road and is fixed to the ground. Examples of the structure may include a street lamp, a roadside tree, a building, an electric pole, a traffic light, a bridge, and the like.

Examples of the landmark may include a mountain, a hill, and the like.

The object may be categorized into a moving object and a stationary object. Examples of the moving object may conceptually include a different vehicle and a pedestrian. Examples of the stationary object may include traffic signals, a road, and a structure.

The object detection apparatus 300 may include a camera 310, a radar 320, a LiDAR 330, an ultrasonic wave sensor 340, an infrared sensor 350, and a processor 370.

According to an embodiment, the object detection apparatus 300 may include one or more constituent elements in addition to the constituent elements described in the present specification and omit one or more of the described constituent elements.

The camera 310 may be positioned on the outside of the vehicle in order to acquire an image of the surroundings of the vehicle. The camera 310 may be a mono camera, a stereo camera 310a, an Around View Monitoring (AVM) camera 310b, or a 360-degree camera.

For example, the camera 310 may be arranged close to the front wind shield in the interior of the vehicle in order to acquire an image of the surroundings in front of the vehicle 100. Alternatively, the camera 310 may be arranged in the vicinity of the front bumper or the radiator grill.

For example, the camera 310 may be arranged close to the rear glass pane in the interior of the vehicle in order to acquire an image of the surroundings behind the vehicle 100. Alternatively, the camera 310 may be arranged adjacent to the rear bumper, the trunk, or the tail gate.

For example, the camera 310 may be arranged close to at least one of the side window panes in the interior of the vehicle in order to acquire an image of the surroundings of the sides of the vehicle. Alternatively, the camera 310 may be arranged in the vicinity of the side mirror, the fender, or the door.

The camera 310 may provide the acquired image to the processor 370.

The radar 320 may include an electromagnetic wave transmission unit and a reception unit. The radar 320 may be realized in compliance with a pulse radar scheme or a continuous wave radar scheme in accordance with the principle of emitting a radio wave. The radar 320 may be realized in compliance with a Frequency Modulated Continuous Wave (FMCW) scheme or a Frequency Shift Keying (FSK) scheme, each being among continuous wave radar schemes, that varies according to a signal waveform.

The radar 320 may detect an object on the basis of a time of flight (TOF) scheme or a phase-shift scheme using an electromagnetic wave as a medium and detect the location of the detected object, the distance to the detected object, and the relative speed with respect to the detected object.

The radar 320 may be arranged on an appropriate position on the outside of the vehicle in order to detect an object located in front of, behind, or on the side of the vehicle.

The LiDAR 330 may include a laser transmission unit and a reception unit. The LiDAR 330 may be realized in a time of flight (TOF) scheme or a phase-shift scheme.

The LiDAR 330 may be realized in a driven or non-driven manner.

In a case where the LiDAR 330 is realized in a driven manner, the LiDAR 330 may rotate by a motor and detect an object in the vicinity of the vehicle 100.

In a case where the LiDAR 330 is realized in a non-driven manner, the LiDAR 330 may detect, by optical steering, an object with a predetermined range from the vehicle 100. The vehicle 100 may include a plurality of non-driven LiDARs 330.

The LiDAR 330 may detect an object on the basis of a time of flight (TOF) scheme or a phase-shift scheme using laser light as a medium and detect the location of the detected object, the distance to the detected object, and the relative speed with respect to the detected object.

The LiDAR 330 may be arranged on an appropriate position on the outside of the vehicle in order to detect an object located in front of, behind, or on the side of the vehicle.

The ultrasonic wave sensor 340 may include an ultrasonic wave transmission unit and a reception unit. The ultrasonic sensor 340 may detect an object using an ultrasonic wave and may detect the location of the detected object, the distance to the detected object, and the relative speed with respect to the detected object.

The LiDAR 340 may be arranged on an appropriate position on the outside of the vehicle in order to detect an object located in front of, behind, or on the side of the vehicle.

The infrared sensor 350 may include an infrared transmission unit and a reception unit. The infrared sensor 340 may detect an object on the basis of infrared light, and may detect the location of the detected object, the distance to the detected object, and the relative speed with respect to the detected object.

The infrared sensor 350 may be arranged on an appropriate position on the outside of the vehicle in order to detect an object located in front of, behind, or on the side of the vehicle.

The processor 370 may control the overall operation of each unit of the object detection apparatus 300.

The processor 370 may detect and track an object on the basis of the acquired image. The processor 370 may perform operations, such as computation of the distance to an object and computation of the relative speed with respect to the object, through an image processing algorithm.

The processor 370 may detect and track an object on the basis of a reflective electromagnetic wave, which results from the transmitted electromagnetic wave returning by reflecting from the object. The processor 370 may perform operations, such as computation of the distance to an object and computation of the relative speed with respect to the object, on the basis of the electromagnetic wave.

The processor 370 may detect and track an object on the basis of reflective laser light, which results from the transmitted laser light returning by reflecting from the object. The processor 370 may perform operations, such as computation of the distance to an object and computation of the relative speed with respect to the object, on the basis of the laser light.

The processor 370 may detect and track an object on the basis of a reflective ultrasonic wave, which results from the transmitted ultrasonic wave returning by reflecting from the object. The processor 370 may perform operations, such as computation of the distance to an object and computation of the relative speed with respect to the object, on the basis of the ultrasonic wave.

The processor 370 may detect and track an object on the basis of reflective infrared light, which results from the transmitted infrared light returning by reflecting from the object. The processor 370 may perform operations, such as computations of the distance to an object and computation of the relative speed with respect to the object, on the basis of the infrared light.

According to an embodiment, the object detection apparatus 300 may include a plurality of processors 370 or may not include the processor 370. For example, each of the camera 310, the radar 320, the LiDAR 330, the ultrasonic 340, and the infrared sensor 350 may individually include its own processor.

In a case where the processor 370 is included in the object detection apparatus 300, the object detection apparatus 300 may operate under the control of a processor of an apparatus within the vehicle 100 or under the control of the control unit 170.

The object detection apparatus 400 may operate under the control of the control unit 170.

The communication apparatus 400 may is a device for performing communication with an external device. The external device here may be another vehicle, a mobile terminal, or a server.

In order to perform communication, the communication apparatus 400 may include a transmission antenna, a reception antenna, and any one of a radio frequency (RF) circuit or an RF element, either of which is capable of implementing various communication protocols.

The communication apparatus 400 may include a short-range communication unit 410, a location information unit 420, a V2X communication unit 430, an optical communication unit 440, a broadcast transmission and reception unit 450, and a processor 470.

According to an embodiment, the object detection apparatus 400 may include one or more constituent elements in addition to the constituent elements described in the present specification and omit one or more of the described constituent elements.

The short-range communication unit 410 may be a unit for a short-range communication. The short-range communication unit 410 may support short-range communication using at least one of the following technologies: Bluetooth^{™} Radio Frequency IDentification (RFID), Infrared Data Association (IrDA), Ultra-Wide Band (UWB), Zig Bee, Near Field Communication (NFC), Wireless-Fidelity (WI-Fi), Wi-Fi Direct, or Wireless Universal Serial Bus (USB).

The short-range communication unit 410 may perform short-range communication between the vehicle 100 and at least one external device over a short-range wireless communication network.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing communication with a server V2I (vehicle to infrastructure), another vehicle V2V (vehicle to vehicle), or a pedestrian V2P (vehicle to pedestrian). The V2X communication unit 430 may include an RF circuit capable of implementing protocols for communication with an infrastructure (V2I), communication between vehicles (V2V), and communication with a pedestrian (V2P).

The optical communication unit 440 is a unit for performing communication with an external device using light as a medium. The optical communication unit 440 may include an optical transmission part for converting an electric signal into an optical signal and transmitting the optical signal to the outside, and an optical reception part for converting the received optical signal back into an electric signal.

According to an embodiment, the optical transmission part may be formed integrally with a lamp included in the vehicle 100.

The broadcast transmission and reception unit 450 is a unit for receiving broadcast signals for an external broadcast management server or transmitting broadcast signals to the external management server over broadcast channels. The broadcast channels may include a satellite channel and a terrestrial channel. The broadcast signals may include a TV broadcast signal, a radio broadcast signal, and a data broadcast signal.

The processor 470 may control the overall operation of each unit of the object detection apparatus 400.

According to an embodiment, the object detection apparatus 400 may include a plurality of processors 470 or may not include the processor 470.

In a case where the processor 470 is included in the object detection apparatus 400, the object detection apparatus 400 may operate under the control of a processor of another apparatus within the vehicle 100 or under the control of the control unit 170.

The communication apparatus 400, along with the user interface device 200, may realize a vehicular display device. In this case, the vehicular display device may be referred to as a telematics device or an Audio Video Navigation (AVN) device.

The object detection apparatus 400 may operate under the control of the control unit 170.

The driving maneuver apparatus 500 may be an apparatus for receiving a user input for driving.

In the manual mode, the vehicle 100 may operate to drive on the basis of a signal provided by the driving maneuver apparatus 500.

The driving maneuver apparatus 500 may include the steering input device 510, an acceleration input device 530, and a brake input device 570.

The steering input device 510 may receive the traveling direction of the vehicle 100, as input, from the user. The steering input device 510 is preferably configured in the form of a wheel, allowing a steering input by the wheel's rotation. According to an embodiment, the steering input device may also be configured in the shape of a touch screen, a touchpad, or a button.

The acceleration input device 530 may receive an input for accelerating the vehicle 100 from the user. The brake input device 570 may receive an input for decelerating the vehicle 100 from the user. The acceleration input device 530 and the brake input device 570 are preferably configured in the shape of a pedal. According to an embodiment, the acceleration input device or the brake input device may also be configured in the shape of a touch screen, a touchpad or a button.

The driving maneuver apparatus 500 may operate under the control of the control unit 170.

The vehicle drive apparatus 600 may be an apparatus for electrically controlling various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioning drive unit 660.

According to an embodiment, the object detection apparatus 600 may include one or more constituent elements in addition to the constituent elements described in the present specification and omit one or more of the described constituent elements.

The vehicle drive apparatus 600 may include its own processor. Each unit of the vehicle drive apparatus 600 may individually include its own processor.

The power train drive unit 610 may control the operation of a power train apparatus.

The power train drive unit 610 may include a motive power source drive part 611 and a transmission drive part 612.

The motive power source drive part 611 may perform control of a motive power source of the vehicle 100.

For example, in a case where a fossil fuel-based engine is a motive power source, the motive power source drive unit 610 may perform electronic control of the engine. Accordingly, the output torque and other parameters of the engine may be controlled. The power source drive part 611 may adjust the engine output torque under the control of the control unit 170.

For example, in a case where an electrical energy-based motor is a motive power source, the motive power source drive unit 610 may perform control of the motor. The power source drive part 610 may adjust a rotational speed, torque, and other parameters of the motor under the control of the control unit 170.

The transmission drive unit 612 may perform control of a transmission. The transmission drive unit 612 may adjust a state of the transmission. The transmission drive part 612 may change the state of the transmission to Drive (D), Reverse (R), Neutral (N), or Park (P).

In a case where the engine is a motive power source, the transmission drive unit 612 may adjust an engaged state of gears in the Drive (D) state.

The chassis drive unit 620 may control the operation of a chassis apparatus. The chassis drive unit 620 may include a steering drive part 621, a brake drive part 622, and a suspension drive part 623.

The steering drive part 621 may perform electronic control of a steering apparatus within the vehicle 100. The steering drive part 621 may change the driving direction of the vehicle.

The brake drive unit 622 may perform electronic control of a brake apparatus within the vehicle 100. For example, the brake drive part 622 may reduce the speed of the vehicle 100 by controlling the operation of the brakes provided on the wheels.

The brake drive part 622 may individually control each of the plurality of brakes. The brake drive part 622 may control brake forces applied to a plurality of wheels so that they differ from one another.

The suspension drive part 623 may perform electronic control of a suspension apparatus within the vehicle 100. For example, in a case where a road surface is uneven, the suspension drive part 623 may reduce the vibration of the vehicle 100 by controlling the suspension apparatus. The suspension drive part 623 may individually control each of the plurality of suspensions.

The door/window drive unit 630 may perform electronic control of a door apparatus or a window apparatus within the vehicle 100.

The door/window drive unit 630 may include a door drive part 631 and a window drive part 632.

The door drive part 631 may perform control of a door apparatus. The door drive part 631 may control the opening or closing of a plurality of doors included in the vehicle 100. The door drive part 631 may control the opening or closing of the trunk or the tailgate. The door drive part 631 may control the opening or closing of the sunroof.

The window drive part 632 may control electronic control of the window apparatus. The window drive part 632 may control the opening or closing of a plurality of windows included in the vehicle 100.

The safety apparatus drive unit 640 may perform electronic control of various safety apparatuses within the vehicle 100.

The safety apparatus drive unit 640 may include an airbag drive part 641, a seat belt drive part 642, and a pedestrian protection apparatus drive part 643.

The airbag drive part 641 may perform electronic control of an airbag apparatus within the vehicle 100. For example, when a risk is detected, the airbag drive part 641 may control the airbag to deploy.

The seat belt drive part 642 may perform electronic control of a seat belt apparatus within the vehicle 100. For example, when a risk is detected, the seatbelt drive part 642 may secure the occupants in seats 110FL, 110FR, 110RL, and 110RR by tightening seat belts.

The pedestrian protection apparatus drive part 643 may perform electronic control of a hood lift and a pedestrian airbag. For example, when a collision with a pedestrian is detected, the pedestrian protection apparatus drive part 643 may control the hood lift and the pedestrian airbag to deploy.

The lamp drive unit 650 may perform electronic control of various lamp apparatuses within the vehicle 100.

The air-conditioning drive unit 660 may perform electronic control of an air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include its own processor. Each unit of the vehicle drive apparatus 600 may individually include its own processor.

The vehicle drive apparatus 600 may operate under the control of the control unit 170.

The drive operation system 700 is a system for controlling the drive operation of the vehicle 100. The drive operation system 700 may operate in the autonomous traveling mode.

The drive operation system 700 may include the traveling system 710, the parking-lot departure system 740, and the parking system 750.

According to an embodiment, the drive operation system 700 may include one or more constituent elements in addition to the constituent elements described in the present specification and omit one or more of the described constituent elements.

The drive operation system 700 may include its own processor. Each unit of the drive operation system 700 may individually include its own processor.

According to an embodiment, in a case where the drive operation system 700 is realized in software, the drive operation system 700 may conceptually operate at a lower level than the control unit 170.

According to an embodiment, the drive operation system 700 may conceptually include at least one of the following: the user interface device 200, the object detection apparatus 300, the communication apparatus 400, the vehicle drive apparatus 600, or the control unit 170.

The traveling system 710 may enable the vehicle 100 to travel.

The traveling system 710 may be provided with navigation information from the navigation system 770 and thus provide a control signal to the vehicle drive apparatus 600, thereby enabling the vehicle 100 to travel. The traveling system 710 may be provided with object information from the object detection apparatus 300 and thus provide a control signal to the vehicle drive apparatus 600, thereby enabling the vehicle 100 to travel. The traveling system 710 may be provided with a signal from an external device through the communication apparatus 400 and thus provide a control signal to the vehicle drive apparatus 600, thereby enabling the vehicle 100 to travel.

The parking-lot departure system 740 may enable the vehicle 100 to depart from a parking lot.

The parking-lot departure system 740 may be provided with navigation information from the navigation system 770 and thus provide a control signal to the vehicle drive apparatus 600, thereby enabling the vehicle 100 to depart from the parking lot. The parking-lot departure system 740 may be provided with object information from the object detection apparatus 300 and thus provide a control signal to the vehicle drive apparatus 600, thereby enabling the vehicle 100 to depart from the parking lot. The parking-lot departure system 740 may be provided with a signal from an external device through the communication apparatus 400 and thus provide a control signal to the vehicle drive apparatus 600, thereby enabling the vehicle 100 to depart from the parking lot.

The parking system 750 may enable the vehicle 100 to park.

The parking system 750 may be provided with navigation information from the navigation system 770 and thus provide a control signal to the vehicle drive apparatus 600, thereby enabling the vehicle 100 to park, The parking system 750 may be provided with object information from the object detection apparatus 300 and thus provide a control signal to the vehicle drive apparatus 600, thereby enable the vehicle 100 to park. The parking system 750 may be provided with a signal from an external device through the communication apparatus 400 and thus provide a control signal to the vehicle drive apparatus 600, thereby enabling the vehicle 100 to park.

The navigation system 770 may provide navigation information. The navigation information may include at least one of the following: map information, set-destination information, path information based on the set destination, information about various objects on a path, lane information, or current location information of the vehicle.

The navigation system 770 may include a memory and a processor. The navigation information may be stored in the memory. The processor may control the operation of the navigation system 770.

According to an embodiment, the navigation system 770 may receive information from an external device through the communication apparatus 400 and update the stored information.

According to an embodiment, the navigation system 770 may also be categorized as a constituent element operating at a lower level than the user interface device 200.

The sensing unit 120 may sense a state of the vehicle. The sensing unit 120 may include posture sensors (for example, a yaw sensor, a roll sensor, and a pitch sensor), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire sensing signals for vehicular posture information, vehicular collision information, vehicular direction information, vehicular location information (GPS information), vehicular angle information, vehicular speed information, vehicular acceleration information, vehicular inclination information, vehicular forward/backward information, battery information, fuel information, tire information, vehicular lamp information, in-vehicle temperature information, and invehicular humidity information. The sensing unit 120 may further acquire sensing signals for steering wheel rotation angle, vehicular external illumination, pressure applied to an acceleration pedal, pressure applied to a brake pedal, and the like.

The sensing unit 120 may further include an accelerator sensor, a pressure sensor, an engine speed sensor, an airflow sensor (AFS), an ambient temperature sensor (ATS), a water temperature sensor (WTS), a throttle position sensor (TPS), a TDC sensor, a crankshaft angle sensor (CAS), and the like.

The vehicle interface unit 130 may serve as a path to various types of external devices connected to the vehicle 100. For example, the vehicular interface unit 130 may include a port that enables a connection to a mobile terminal and may be connected to the mobile terminal through the port. In this case, the vehicular interface unit 130 may exchange data with the mobile terminal.

The vehicle interface unit 130 may serve as a path for supplying electrical energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 may be electrically connected to the control unit 170. Basic data for the units, control data for controlling the operations of the units, and data, which are input and output, may be stored in the memory 140. Examples of the memory 140 may include various hardware storage devices, such as a ROM, a RAM, an EPROM, a flash drive, and a hard drive. Programs and the like for processing or control by the control unit 170 and various data for the overall operation of the vehicle 100 may be stored in the memory 140.

According to an embodiment, the memory 140 may be integrally formed with the control unit 170 or be realized as a constituent element operating at a lower level than the control unit 170.

The control unit 170 may control the overall operation of each unit within the vehicle 100. The control unit 170 may be referred to as an Electronic Control Unit (ECU).

Under the control of the control unit 170, the power supply unit 190 may supply electric power necessary to operate each constituent element, Specifically, the power supply unit 190 may receive electric power supplied from a battery within the vehicle or from other sources.

At least one processor and the control unit 170, which are included in the vehicle 100, may be realized using at least one of the following: application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electrical units for performing other functions.

In embodiments of the present disclosure, a 'vehicle' or a 'called vehicle' is assumed to be an unmanned vehicle. Therefore, among the configurations and examples described with reference to FIGS. 1 to 7, configurations and examples that are applicable only to a case where a 'vehicle' or a 'called vehicle' is not an unmanned vehicle may be excluded. In addition, according to the present disclosure, the 'called vehicle' and the 'vehicle' may be interchangeably.

In embodiments of the present disclosure, a 'passenger' or 'client' is used to refer to a person or a device (for example, an AR service provision device) that calls the vehicle. Therefore, the location of the 'passenger' or 'client' is used to refer to the current location of the person or device that calls the vehicle. In addition, according to the present disclosure, one or more 'passengers' or 'clients' may be assumed to be present.

In addition, an AR service provision device 800 according to the present disclosure, as illustrated in FIG. 7, may be arranged in a mountable manner, as part of the vehicle, in the vehicle or be realized as a terminal device separate from the vehicle.

In the fomer case, the AR service provision device 800 may be realized in the form of a display or the like that is arranged in the vehicle. In this case, the AR service provision device 800 is described as communicating with a terminal carried by a passenger and operating in conjunction with the terminal.

In the latter case, the AR service provision device 800 may be realized in the form of a terminal carried by a passenger. In this case, the AR service provision device 800 is described as communicating with the vehicle 100 and operating in conjunction with the vehicle 100.

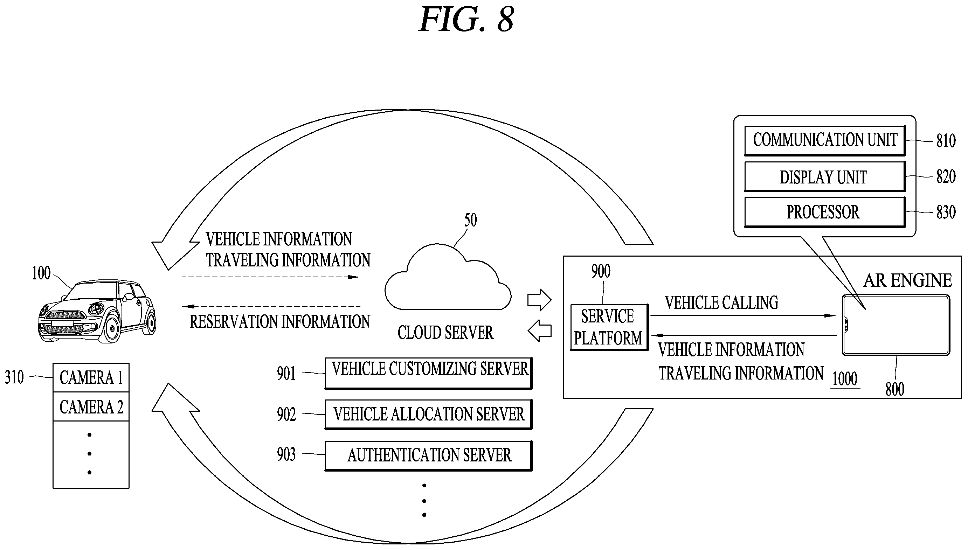

FIG. 8 is a diagram illustrating the detailed configurations of both a system 1000 for providing a vehicle calling service related to an embodiment of the present disclosure and the AR service provision device 800.

In embodiments of the present disclosure, unless otherwise mentioned, the AR service provision device 800 is described on the assumption that the AR service provision device 800 refers to a terminal device carried by a passenger (or a second passenger).

In addition, in embodiments of the present disclosure, before a passenger boards an unmanned vehicle, the AR service provision device 800 may be used to refer to a terminal device carried by a passenger (or a second passenger). Furthermore, after a passenger boards an unmanned vehicle, the AR service provision device 800 may be used to refer to one of the following: a terminal device carried by a passenger or display arranged in the vehicle.

One or more AR service provision devices 800 may be assumed to be present. For example, the first passenger and the second passenger may carry their own AR service provision devices 800, respectively. In this case, each of the AR service provision devices 800 may operate in a manner that directly communicates with the vehicle 100 and directly operates in conjunction therewith. Alternatively, any one of the AR service provision devices 800 may operate in a manner that directly communicates with the vehicle 100 and directly operates in conjunction therewith.

The AR service provision device 800 may be communicatively connected to the vehicle through a communication module.

In addition, an application for providing the vehicle calling service according to an embodiment of the present disclosure may be installed on the AR service provision device 800. Thus, the AR service provision device 800 may operate in conjunction with a service platform by applying the application.

That is, the AR service provision device 800 according to an embodiment of the present disclosure may operate in conjunction with a service platform for providing a service for vehicle calling, authentication, and location designation. In this case, the AR service provision device 800 and the service platform may constitute a system for providing a vehicle calling service.

The service platform may provide both an AR service and an MR service.

Specifically, the AR service provided by the service platform may provide an augmented reality experience related to information display related to a vehicle calling service, such as recognizing a called vehicle that travels. In addition, the MR service provided by the service platform may provide a digital world experience based on a mixed reality related to the vehicle calling service. In one or several embodiments, the MR service may be provided by the service platform only at the request (for example, at the request of a passenger or by passenger input).

The AR service provision device 800 may be configured to include a communication unit 810, a display 820, and a processor 830.

The communication unit 810 may be configured to be enabled to communicate with a vehicle, a service platform, and/or another apparatus/server/cloud. In addition, the communication unit 810 may transmit a request in such a manner that a service platform is enabled to communicate with a vehicle and/or another apparatus/server/cloud. Through the service platform, information about the result of operation/request may be received from a vehicle and/or another apparatus/server/cloud.

An input and an output related to the vehicle calling service may be displayed on the display 820. In addition, user interfaces provided through the service platform, requests for the AR service and the MR service, and/or the results of the requests may be displayed on the display 820.

The processor 830 may include an AR engine for providing the AR service and/or the MR service and operate in conjunction with the AR engine. That is, the processor 830 may be integrally formed with the AR engine and operate in conjunction with the apparatus/service/cloud that includes the AR engine.

The processor 830 may include an AR renderer and/or an MR renderer or may operate in conjunction with the AR renderer and/or the MR renderer. For example, the processor 830 may operate in conjunction with the MR renderer that generates a digital twin map on the basis of both a three-dimensional polygon map received from a DtaaS server and an image collected through a camera in the vehicle 100 or may include the MR renderer that performs this operation.

The processor 830 may operate in conjunction with the service platform for providing the vehicle calling service. For example, in conjunction with the service platform, the processor 830 may receive a request (for example, a vehicle allocation request, vehicle customizing information, or the like) input by the AR service provision device 800 and enable this request to be transmitted to a related node (for example, a vehicle allocation server). In addition, for example, in conjunction with the service platform, the processor 830 may transmit information (for example, vehicle allocation result information, vehicle information, traveling information, and the like) transmitted from the vehicle and/or a related server to the AR service provision device 800. Furthermore, the processor 830 may enable a user interface and a result, which are related to this transmitted information, to be output to the AR service provision device 800.

With reference to FIG. 8, a system 1000 for providing a vehicle calling service according to an embodiment of the present disclosure may be configured to include a service platform 900, which communicates with at least one node, and the AR service provision device 800. Accordingly, in embodiments of the present disclosure, the system 1000 for providing a vehicle calling service operates in conjunction with the service platform 900 and the AR service provision device 800.

The service platform 900 may communicate with at least one node to provide the vehicle calling service and operate to provide a user interface related to a communication result to the AR service provision device 800.

At this point, at least one node may include the vehicle 100, a cloud server 50, a vehicle customizing server 901, a vehicle allocation server 902, and an authentication server 903.

The cloud server 50 may receive the vehicle information and the traveling information from the vehicle 100 and provide them to the service platform 900. The cloud server 50 may transmit vehicle reservation information, transmitted through the service platform 900, to the vehicle 100, that is, to the vehicle 100 the allocation of which is requested.

The vehicle customizing server 901 may receive prior information (for example, the external color of the vehicle, a passenger designation code, and the like), input by the AR service provision device 800, through the service platform 900, and transmit prior information to the vehicle 100 the allocation of which is requested.

On the basis of both the location information of the AR service provision device 800 and at least one request, the vehicle allocation server 902 transmits a vehicle allocation request to a candidate vehicle. Furthermore, the vehicle allocation server 902 transmits a vehicle allocation request result to the AR service provision device 800 through the service platform 900.

Based on both passenger information transmitted through the service platform 900 and an image acquired through the camera 310 in the vehicle 100, the authentication server 903 authenticates whether or not a passenger who called the vehicle is the correct passenger and transmits an authentication result to the vehicle 100 and the AR service provision device 800 of the passenger through the service platform 900.

At the time of vehicle calling, the service platform 900 may transmit vehicle designation and customizing information to the vehicle allocation server 902. The service platform 900 may request the vehicle customizing server 901 to store and/or search for the customizing information received from the AR service provision device 800. The service platform 900 may enable the authentication server 903 to generate a passenger authentication key, request the authentication server 903 to perform authentication, which is based on the features of an image, and receive the authentication result. In addition, the service platform 900 may additionally communicate with another node (for example, an FMS server, a traveling path server, a data relay server, or the like) to renew and manage vehicle destinations, to compute traveling paths, and to relay data in real time between a server and a client.

The service platform 900 may receive information about response results from one or more nodes and transmit the received information to the AR service provision device 800. Thus, the service platform 900 may enable the AR service provision device 800 to immediately output the result of rendering an AR image, corresponding to the vehicle customizing information, onto a (real or virtual) vehicle, or to output a user interface capable of performing this rendering.

Although not illustrated, the service platform 900 may further include a Machine-Learning-as-a-Service (MLaaS) platform that transmits data necessary to provide the vehicle calling service to a hybrid computing system. In this case, the service platform 900 may provide a more customized vehicle calling service to steady customers based on learning through the MLaaS platform.

The AR service provision device 800 according to the embodiment of the present disclosure may display a three-dimensional map, which results from rendering an AR image, generated based on the vehicle information and location information of a called vehicle, onto the called vehicle.

In response to a request received while the three-dimensional map, resulting from rendering the AR image onto the called vehicle, is displayed, the AR service provision device 800 according to the embodiment of the present disclosure may convert the three-dimensional map into a three-dimensional neighboring region map, which is based on the location information of a passenger. Furthermore, the AR service provision device 800 may additionally display an AR graphic object at a location related to possible vehicle boarding or alighting, on the basis of the attribute of difficulty in vehicle boarding or alighting.

According to an embodiment, the AR graphic object may include a first AR graphic object, which is rendered, at a vehicle boarding- or alighting-possible location, and a second AR graphic object, which is rendered, at a vehicle boardingor alighting-impossible location.

The system for providing a vehicle calling service 1000 according to the embodiment of the present disclosure includes the service platform 900 that operates in conjunction with the AR service provision device 800 and communicates with one or more nodes. At this point, the one or more nodes may include a called vehicle 100 and a cloud server related to the vehicle calling service.

The service platform 900 may recognize, based on the location information of a passenger, that the called vehicle enters a vehicle boarding-possible section and may request the called vehicle to inclusively image-capture a plurality of candidate passengers using a camera in the called vehicle and to generate a plurality of thumbnails.

The service platform 900 may receive information about the plurality of thumbnails from the called vehicle and provide a user interface for selecting one from among the plurality of generated thumbnails to the AR service provision device 800.

The service platform 900 may transmit information about the thumbnail selected by the AR service provision device 800 to the called vehicle 100 and enable the called vehicle 100 to track the location of a candidate passenger.

In this manner, through the AR and/or MR service, the AR service provision device 800 may specifically check, select, and provide the vehicle boarding- or alighting-possible location, which is based on the attribute of difficulty in vehicle boarding or alighting. In addition, the AR service provision device 800 operates in conjunction with the service platform 900 in such a manner that through the AR and/or MR service, the called vehicle and the passenger identify each other, thereby enabling safe and accurate vehicle boarding.

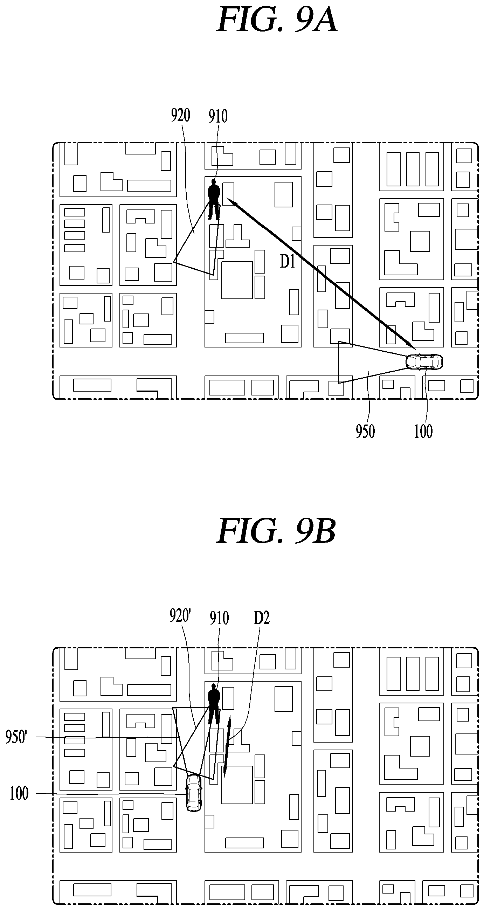

FIGS. 9A and 9B are views that are referenced to describe a distance condition related to vehicle calling related to an embodiment of the present disclosure.

In an embodiment of the present disclosure, the distance between the called vehicle and the passenger that is not included within the viewing angles of each other's cameras is defined as a "first distance D1."

In an embodiment of the present disclosure, the distance between the called vehicle and the passenger that is included within the viewing angles of each other's cameras is defined as a "second distance D2." In addition, the "second distance" indicates that a stationary obstacle (for example, a building, a roadside tree, or a structure such as a bridge pier) is absent along a straight-line distance between the called vehicle and the passenger, thereby enabling mutual image-capturing.

In embodiments of the present disclosure, under a condition that satisfies the first condition, the passenger recognizes the current location of the called vehicle through the three-dimensional map, resulting from rendering the AR image, which is based on the location information and vehicle information of the vehicle. In addition, under the condition that satisfies the first distance, the called vehicle recognizes the location of the passenger on the basis of a location designated by the passenger using a GPS or the like.

With reference to FIG. 9A, a viewing angle 920 of a passenger 910 (or an image-capturing range 920 of the AR service provision device 800 of the passenger 910) does not overlap with an image-capturing range 950 of the called vehicle 100 that travels, thereby satisfying the first distance D1. In this case, the passenger and the called vehicle still cannot recognize each other.

In embodiments of the present disclosure, under the condition that satisfied the second distance, the called vehicle can recognize, based on the location information of the passenger, that the called vehicle enters the vehicle boarding-possible section.

With reference to FIG. 9B, a viewing angle 920' of a passenger 910 (or an image-capturing range 920' of the AR service provision device 800 of the passenger 910) overlaps with an image-capturing range 950' of the called vehicle 100 that approaches the passenger, thereby satisfying the second distance D2.

In this case, the passenger can actually recognize the called vehicle through information, such as the license plate number of the called vehicle.

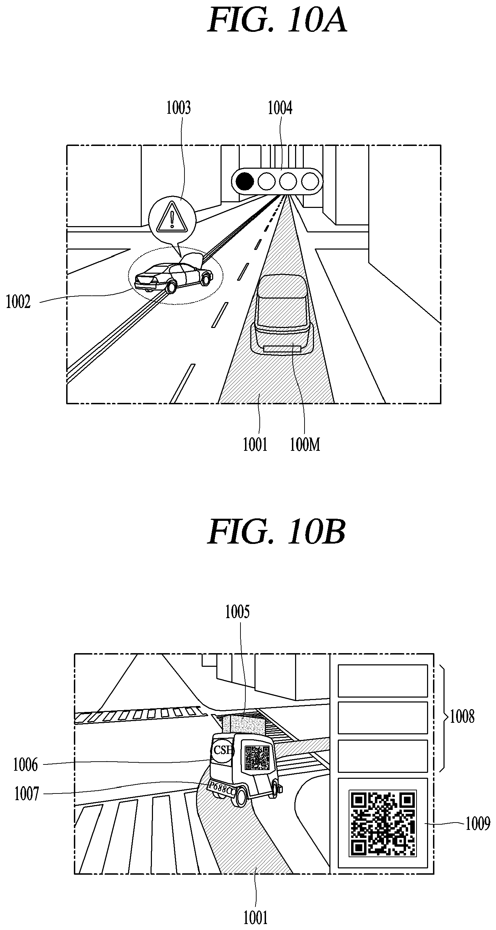

In addition, in an embodiment, in a case where the called vehicle enters the viewing angle or the image-capturing range, the passenger sees that the AR object rendered based on the vehicle information and the location information, is displayed on the real called vehicle. Thus, the passenger can more accurately recognize the vehicle called by the passenger. This accurate recognition is described in more detail with reference to FIGS. 10A to 10E.

However, even under the condition that satisfies the second distance D2, the called vehicle cannot accurately recognize who the passenger is, before the passenger approaches the called vehicle and attempts to board the called vehicle. Accordingly, a higher-quality service cannot be provided to the passenger, leading to increased discomfort for passengers carrying baggage at crowded airports where many people wait.

Accordingly, according to the present disclosure, under the condition that satisfies the second distance, the vehicle may provide images of candidate passengers and track the passenger based on the image selected by the passenger. The passenger can be accurately recognized even before vehicle boarding, and thus a good-quality service can be provided.

In addition, according to the present disclosure, the vehicle may recommend that the passenger change a vehicle boarding or alighting location to a location where vehicle boarding or alighting is facilitated. Furthermore, the passenger may change in advance the vehicle boarding or alighting location and then provide an accurate location to the vehicle.

In this manner, various embodiments of the present disclosure, in which the called vehicle and the passenger recognize each other and interact with each other, are provided.

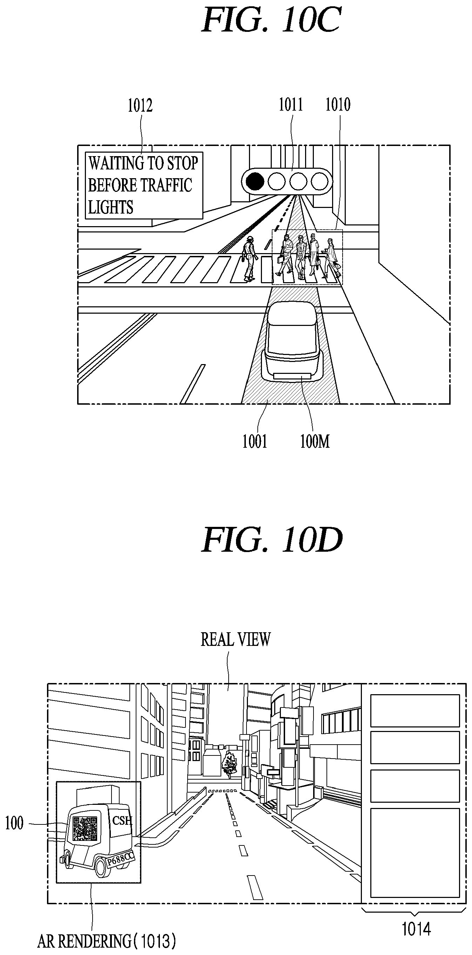

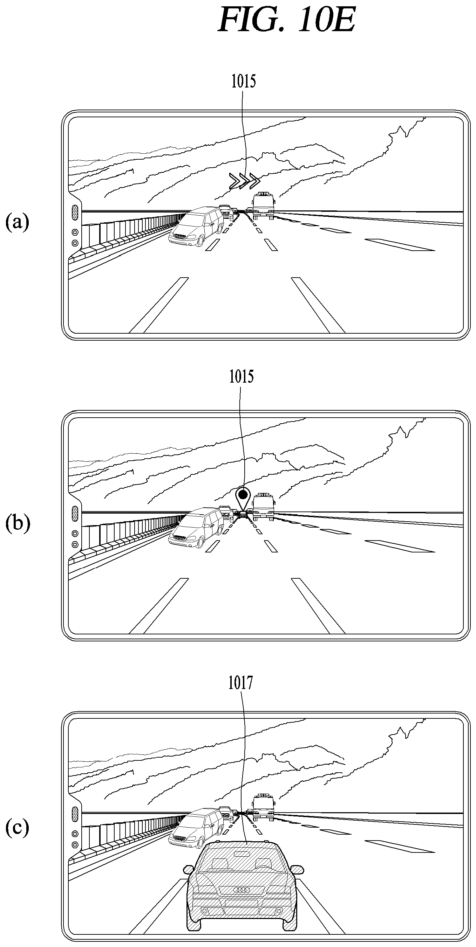

FIGS. 10A, 10B, 10C, 10D, and 10E are views illustrating various examples, respectively, in which the location and traveling of the called vehicle related to an embodiment of the present disclosure are displayed using an MR map view, thereby guiding the passenger in vehicle boarding.

FIGS. 10A to 10C illustrate examples, respectively, in which, under the condition that satisfies the above-described 'first distance,' both a three-dimensional map based on the mixed reality (MR) and a called-vehicle image are provided on a display of the AR service provision device 800.

Specifically, as illustrated in FIG. 10A, the AR service provision device 800 provides a called vehicle 100M, which travels, in the form of a bird's view (or a bird's eye view) on the MR map view generated based on the location information and traveling information of the called vehicle.

To this end, the AR service provision device 800 may operate in conjunction with the service platform that provides metadata (for example, service metadata or three-dimensional assets) for providing the MR service, as a three-dimensional map (for example, a digital twin map (DT)), such as a three-dimensional polygon map or a digital twin map. Alternatively, the AR service provision device 800 may operate in conjunction with one or more nodes (for example, clouds, servers, or the like) through the service platform.

In the bird's view in FIG.10A, traffic lights information 1004, which is based on a C-ITS or camera recognition, a traveling path 1001 to a vehicle boarding location designated by the passenger, an object (for example, another vehicle) 1002 recognized by a sensor in the called vehicle, and related attention information 1003 may be provided together on the three-dimensional map.

In FIG. 10B, when the bird's view in which the called vehicle travels along the traveling path 1001 on the three-dimensional map is provided, various AR objects, which are based on customizing information designated by the passenger who called the vehicle, may be rendered and displayed. For example, in the called vehicle, a passenger-set color may be rendered onto a hat-shaped light 1005, and a passenger-set unique code 1006 and a license plate number 1007 may be rendered onto an external display of the called vehicle. In addition, identification code information 1008 and QR information 1009 for passenger authentication may be additionally displayed on one region (for example, on the right-side region) of a display illustrated in FIG. 10B.

Subsequently, as illustrated in FIG. 10C, while the called vehicle 100M in the bird's view travels along the traveling path 1001, a traveling object, for example, a pedestrian 1010 who is recognized through various sensors provided in the real vehicle, signal information 1011, and traveling-related information, for example, a word balloon object 1012, which includes text indicating "Waiting to stop before traffic lights," may be in real time rendered and displayed.

Three-dimensional screen rotation, three-dimensional object rotation, view expansion/contraction, and the like may be performed on the MR map view illustrated in FIG. 10A to 10C on the basis of various types of inputs.

Subsequently, FIG. 10D illustrates an example where, under the condition that satisfies the above-described second distance, a real view is displayed on the display of the AR service provision device 800 and where the AR object, which is based on the customizing information, is rendered onto the real called vehicle in the real view.

FIG. 10D illustrates a situation where the real called vehicle 100 enters an image-capturing range of the AR service provision device 800 of the passenger. At this point, the accurate location is tracked based on the unique information of the called vehicle 100, and the AR graphic object 1013 generated through the customizing information provided as the prior information by the passenger is in real time rendered onto the real called vehicle 100, for example, onto the external display. Identification information of the called vehicle, authentication information, and the like may be provided on one region (for example, the right-side region) of the AR service provision device 800.

Specifically, the AR service provision device 800 recognizes a plurality of nearby vehicles within a preview image of a camera. The features of the recognized nearby vehicle are matched with features, which are based on the customizing information set by the passenger. The real called vehicle is determined based on the similarity, and then, the location of the real called vehicle is tracked. At this point, the features of the vehicle may include at least one of the following: a vehicle color, a vehicle type/model, a hood model, a hat-shaped light, a headlight shape, a license plate number, or an external identification display letter/identification code (QR).

The AR service provision device 800 may display, for tracking, the determined called vehicle by rendering an image box display in real time onto the vicinity of the determined called vehicle in such a manner that the passenger can easily track the determined called vehicle. That is, the AR object indicating the finally determined called vehicle in an emphasized manner may be rendered. Alternatively, the background of the remaining real view, except for the finally determined called vehicle, may be processed in black and white. In addition, although not illustrated, the AR word balloon image indicating a vehicle for the passenger to board may be displayed on the finally determined called vehicle. Alternatively, a unique feature portion (for example, a vehicle wheel), customized by the passenger, of the exterior appearance of the vehicle may be highlighted. In addition, although not illustrated, for the user sensitive to personal information, there is no change to the external E-link and/or transparent display of the real vehicle, and the AR graphic object may apply only to a vehicle displayed on the AR service provision device 800. In addition, in one or several embodiments, in a case where the finally determined called vehicle is hidden by a nearby obstacle (for example, a nearby vehicle), the location of the vehicle, which is estimated at the current point in time (a 'second point in time') determined by considering the location, at the immediately previous point in time (a 'first point in time'), of the vehicle, may be predicted. Then, the finally determined called vehicle may be tracked by partially highlighting the predicted location.

Subsequently, FIG. 10E illustrates various display examples that vary according to the location of the called vehicle on the three-dimensional map in the AR service provision device 800. In a case where the called vehicle does not appear on the displayed three-dimensional map, the AR service provision device 800 guides the passenger toward the approximate location of the called vehicle by displaying direction information 1015. In addition, in a case where the called vehicle is present on the displayed three-dimensional map, but is difficult to recognize due to a great distance, guidance may be provided by rendering only location information 1016. When the called vehicle appears in full face on the three-dimensional map in the AR service provision device 800, an AR object 1017, which is based on the customized information of the passenger, is rendered on the external display of the vehicle or on the entire vehicle. Although not illustrated, in response to a request, the AR service provision device 800 may additionally display information about a nearby POI on the traveling path for the called vehicle, and the passenger may change the initially set vehicle boarding location based on the displayed POI information.

In this manner, the vehicle called by the passenger can be more accurately identified by rendering the AR object in a form that varies according to the location of the called vehicle on the three-dimensional map.

In one or several embodiments, the external E-Ink and/or transparent display of the called vehicle may be displayed in such a manner as to apply text, an image, a color, and similar elements, which are based on the customizing information of the passenger. At this point, the customizing information of the passenger includes the color and texture of the vehicle, which are set as a preference by the user, and preset unique ID information.

In this regard, the customizing information set through the AR service provision device 800 may be uploaded onto the vehicle customizing server 901 through the service platform. The customizing information stored in a database within the vehicle customizing server 901, along with the unique ID, the current location on GPS, the destination, and other information necessary at the time of vehicle calling, may be transmitted to the vehicle allocation server 902. Accordingly, the AR service provision device 800 reflects external features, customized in advance by the user, in the vehicle actually allocated to the user, and thus renders the external features onto the three-dimensional map. That is, among the external features of the allocated vehicle, features identifiable with the naked eye are reflected in a three-dimensional model as they are, and displayed on the three-dimensional map.

A method of recognizing a vehicle for a passenger to board, from a plurality of vehicles, through the AR service provision device 800, for example, a camera of a terminal device of the passenger is described above. Embodiments related to a method in which a vehicle accurately recognizes a passenger before the passenger boards the vehicle, by providing a plurality of passenger images acquired through a camera of the vehicle to the AR service provision device 800, are described.

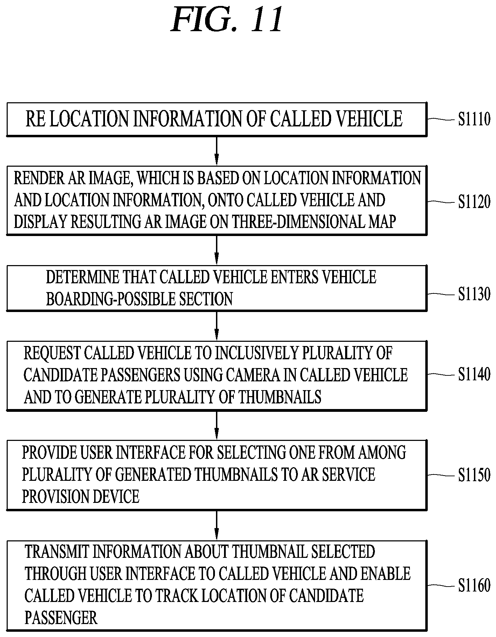

FIG. 11 is a flowchart that is referenced to describe a method of determining and authenticating a passenger who called a vehicle using a thumbnail related to an embodiment of the present disclosure.

Steps in FIG. 11 are performed by either the service platform or the AR service provision device 800 operating in conjunction with the service platform, both of which constitute the system for providing a vehicle calling service. In addition, one or several steps in FIG. 11 may be performed by the AR service provision device 800, and one or several steps may be performed through the service platform communicating with one or more nodes. At this point, one or more nodes include the called vehicle, the cloud server, and the like that communicate with the service platform.

Specifically, one or several steps in FIG. 11 may be performed by the service platform, which receives or transmits data/commands/signals from or to the called vehicle, one or more servers, and/or the AR service provision device 800. In addition, one or several steps in FIG. 11 may be performed by the AR service provision device 800, operating in conjunction with the service platform, which transmits data/commands/signals through the service platform or which outputs information to the AR service provision device 800 on the basis of the data/commands/signals received from one of them or changes the information.

With reference to FIG. 11, the AR service provision device 800 may acquire in real time the location information of the called vehicle directly or through the service platform 900 (S1110). To this end, the AR service provision device 800 or the service platform 900 may receive location data directly from the called vehicle, or the service platform 900 may receive GPS-based location data through one or more nodes.

Accordingly, the AR service provision device 800 may render the AR image, which is based on the location information and vehicle information of the called vehicle, onto the called vehicle, thereby displaying the resulting AR image on the three-dimensional map (S1120).

At this point, the called vehicle to be displayed on the three-dimensional map is displayed in the form of a bird's view, taking into consideration the traveling information of the called vehicle, for example, the traveling direction and traveling speed. In addition, the external features, which are based on the customizing information preset by the passenger, are displayed on the called vehicle to be displayed on the three-dimensional map.

The signal information, the POS information, and the like, which are additionally displayed while the called vehicle, as described above, is displayed in the form of a bird's view on the AR service provision device 800, are described in detail above with reference to FIGS. 10A to 10C, and therefore, the descriptions thereof are omitted.

When the distance between the called vehicle and the passenger (or the AR service provision device 800 of the passenger) is changed from the above-described 'first distance' to the above-described 'second distance,' the AR service provision device 800 may determine that the called vehicle onto which the AR image is rendered enters the vehicle boarding-possible section (S1130).

At this point, the vehicle boarding-possible section may refer to a case where the distance between the vehicle and the passenger falls within the second distance (that is, a case where an image-capturing range of the camera provided in the called vehicle and an image-capturing range of the camera provided in the AR service provision device 800 fall within a distance range where the called vehicle and the AR service provision device 800 can image-capture each other) or a case where the location of the vehicle falls within a predetermined radius (for example, 10 m to 15 m) from the vehicle boarding location, which is input/set by the passenger. In addition, the vehicle boarding-possible section may refer to a case where the distance between the vehicle and the passenger falls within the second distance and where the called vehicle is not present in the stopping-impossible section.

In a case where the called vehicle enters the vehicle boarding-possible section in this manner, the AR service provision device 800 may recognize the called vehicle through changes in the external features of the called vehicle .

The vehicle may also approximately identify the passenger through the location information and the passenger information that is input/set in advance by the passenger. However, at a crowded place (for example, a stop or the like). the vehicle has difficulty accurately recognizing who the passenger is. Accordingly, the following steps for providing an improved service where the vehicle accurately specifies a passenger and the discomfort of a specified passenger is reduced may be further performed.

Specifically, in response to the called vehicle entering the vehicle boarding-possible section, the service platform may request the called vehicle to inclusively image-capture a plurality of candidate passengers using a camera in the called vehicle and to generate a plurality of thumbnails (S1140).

Specifically, the service platform 900 image-captures all nearby passengers in the vehicle boarding-possible section through a plurality of external cameras in the called vehicle, analyzes the captured images, and generates a thumbnail of each candidate passenger. At this point, each generated thumbnail is matched with the unique ID. The service platform 900 transmits information about both the thumbnail generated by the called vehicle and the ID to the AR service provision device 800. In addition, the service platform 900 may upload the information about both the thumbnail generated by the called vehicle and the ID onto at least one node.

Subsequently, the service platform 900 may provide a user interface for selecting one from among the plurality of generated thumbnails to the AR service provision device 800 (S1150). At this point, the user interface may include an API related to the display of the plurality of thumbnails, the selection of one of them, and the transmission of the selected information.

For example, the service platform 900 may provide a user interface for displaying the plurality of thumbnails in decreasing order of similarity to the passenger information, which is input/set by the passenger, and for allowing the selection of a thumbnail, indicating the passenger, through the input by the passenger. In addition, for example, the service platform 900 may provide a user interface for displaying the plurality of thumbnails in a card format that can be flicked in the horizontal/vertical direction and for allowing the selection of one of them. In addition, the service platform 900 may provide a user interface for allowing the selection of one of the plurality of thumbnails in a state where each thumbnail overlaps with the corresponding position within the entire image.

Next, the service platform 900 may receive information about the thumbnail selected in this manner through the user interface from the AR service provision device 800, transmit the information about the selected thumbnail to the called vehicle, and enable the called vehicle to track the location of the candidate passenger (S1160).

Specifically, the service platform 900 transmits an ID and features of the selected thumbnail, which are received, to one or more nodes for sharing, and the called vehicle specifies a passenger based on the features (hereinafter referred to as 'first features') of the thumbnail matched with the ID, thereby enabling the called vehicle to track the specified passenger through the camera.

A consensus message according to the selection of the thumbnail may be displayed on the AR service provision device 800.

In a case where the distance between the called vehicle and the passenger falls within a third distance, the vehicle may come to a stop. At this point, the third distance may refer to a case where the location information of the called vehicle and vehicle boarding location information, which is input/set, are matched with each other or are almost the same, with the selection of the thumbnail by the AR service provision device 800 serving as a starting condition.

In an embodiment, when the vehicle comes to a stop, the service platform 900 may compare the features (hereinafter referred to as second features) of the image of the candidate passenger (or pedestrian) recognized through a side camera in the vehicle with the first features, and then determine the final passenger.

For example, when the vehicle comes to a stop, the service platform 900 may determine whether or not the passenger approaching the vehicle matches the passenger tracked based on the first features, with a similarity score meeting or exceeding a reference value, and may enable the called vehicle to perform an automatic passenger authentication operation and/or a boarding guidance operation.

At this point, the automatic passenger authentication refers to a process in which, if the result of the comparison between the first features and the second features meets or exceeds the reference value, the authentication succeeds and if the result does not meet the reference value, the authentication fails.

In addition, the boarding guidance operation may include displaying information, which guides the passenger in boarding, on the external features (for example, external E-Ink and/or transparent display) of the called vehicle, or outputting similar voice guidance information to the outside.

According to an embodiment of the present disclosure, in this manner, the vehicle called by the passenger can be accurately identified, and, additionally, the vehicle specifies and authenticates the passenger in advance before boarding, through the thumbnail selected by the passenger. Thus, mutual interaction and authentication are performed smoothly.

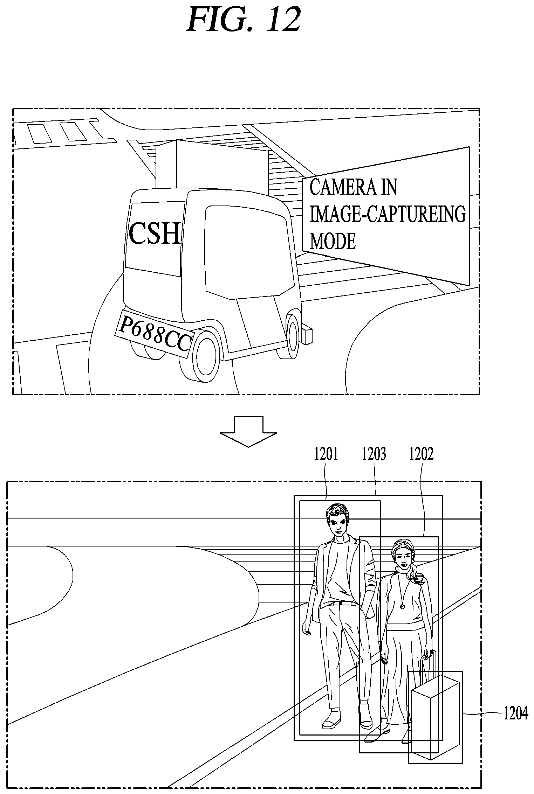

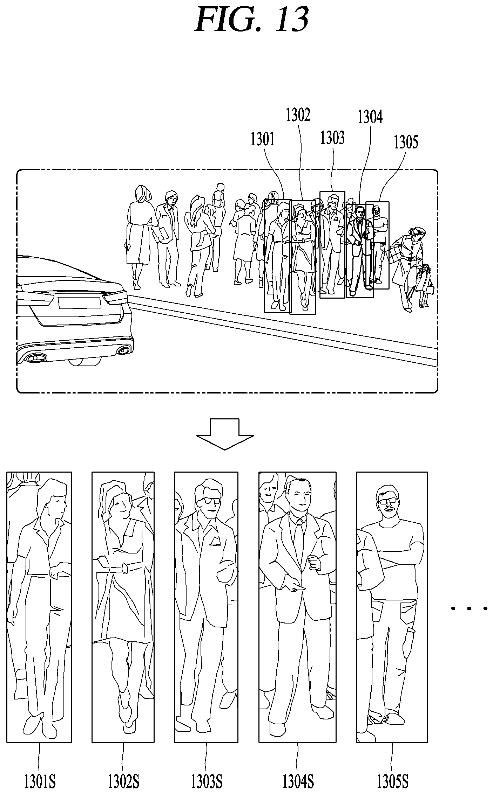

FIGS. 12 and 13 are views that are referenced to describe a process in which, at the request of the service platform related to an embodiment of the present disclosure, the vehicle generates thumbnails of candidate passengers and provides the generated thumbnails to the AR service provision device 800.

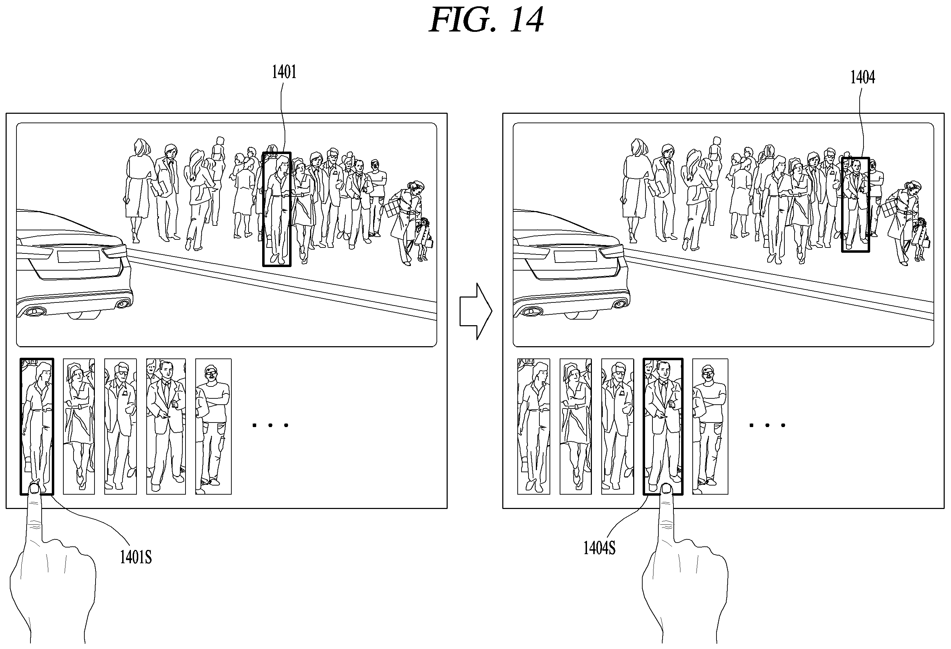

FIG. 14 is a view that is referenced to describe a process in which, in the AR service provision device 800 related to an embodiment of the present disclosure, the passenger who called the vehicle is selected using the thumbnail.

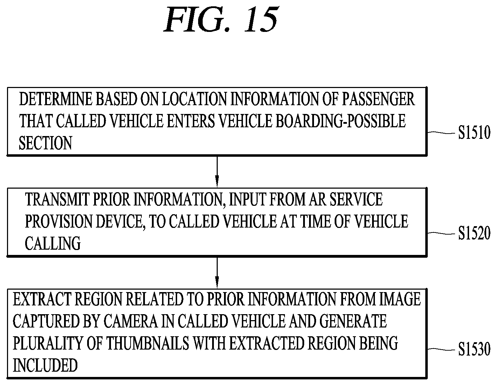

FIG. 15 is a flowchart that is referenced to describe a method of generating a thumbnail based on prior information of the passenger who called the vehicle related to an embodiment of the present disclosure.

First, with reference to FIG. 12, when the called vehicle enters the vehicle boarding-possible section based on the vehicle boarding location, which is input/set by the passenger, the called vehicle image-captures a candidate passenger present in the vehicle boarding-possible section through a plurality of external cameras in the vehicle. The called vehicle generates a thumbnail of each candidate from the captured image.

Specifically, the called vehicle detects boarding-eligible objects through the plurality of external cameras and generates an individual thumbnail of each detected object.

In an embodiment, when the plurality of thumbnails are generated, it may be determined whether or not passenger information (prior information or additional information), which is input/set in advance, is included, and the individual thumbnail may be generated based on the determination.

In this regard, with reference to FIG. 15, through the service platform 900, the AR service provision device 800 determines that the vehicle enters the vehicle boarding-possible section based on the location information of the passenger (S1510). That is, the service platform 900 may determine that the vehicle enters the vehicle boarding-possible section based on the current location information of the passenger or the vehicle boarding location information designated by the passenger.

When the passenger calls the vehicle, the service platform 900 may transmit additional information, which is input from the AR service provision device 800, to the called vehicle (S1520). At this point, the additional information (the passenger information or the prior information) includes the passenger's gender, external clothing features, stored unique information, number of baggage items, and the presence or absence of a fellow passenger.

Next, the service platform 900 may enable the called vehicle to extract a region related to the additional information from an image captured using the camera in the called vehicle and to generate the plurality of thumbnails, with the extracted region being included (S1530).

Now, with reference to FIG. 12, first image objects 1201 and 1202 and a first recognition box are displayed on each candidate passenger detected from the captured image. Second image objects 1203 and 1204 are displayed on an object recognized based on the passenger information, input/set in advance by the passenger, which is transmitted to the called vehicle. For example, in a case where a 'bag' and 'presence of a following passenger' are included as the passenger information, which is input/set in advance by the passenger, the second image objects 1203 and 1204 and a second recognition box are displayed on an object matched with each piece of passenger information.

According to an embodiment, in a case where passenger information is included, an edited thumbnail may be generated, including the object matched with the passenger information. To this end, the service platform 900 transmits additional information, which is input from the AR service provision device 800, at the time of vehicle calling and enables the called vehicle to further extract a region related to the additional information from the image captured by the camera in the called vehicle, and to generate a plurality of thumbnails, with the extracted region being included.

With reference to FIG. 13, information about the generated plurality of thumbnails is received through the service platform 900 and are displayed on the display of the AR service provision device 800. As illustrated in FIG. 13, a plurality of thumbnails, for example, thumbnails 1301S to 1305S, generated from one image including all candidate passengers 1301 to 1305 are provided for selection. At this point, when one is selected from the plurality of generated thumbnails, for example, the thumbnails 1301S to 1305S, the selected thumbnail is displayed in a manner that is matched with one position on the image including all the candidate passengers 1301 to 1305,

For example, as illustrated in FIG. 14, when a selection input is applied to a first thumbnail 1401S in the AR service provision device 800, a bounding box is displayed on a candidate passenger 1401 corresponding to the first thumbnail 1401S in the entire image. When a selection input is applied to another thumbnail 1401S in the AR service provision device 800, a bounding box is displayed on a candidate passenger 1404 corresponding to the other thumbnail 1401S selectively input from the entire image. Accordingly, the passenger may select his/her own thumbnail accurately and intuitively by simultaneously checking an individual thumbnail and an image of the vicinity.

In an embodiment, human faces in the generated thumbnail and the entire image may be provided in a blurred manner to protect the privacy of individuals. In this case, the passenger can select his/her own thumbnail, taking into consideration external features other than location, posture, and facial characteristics.

In FIG. 14, when a selection input is applied to the first thumbnail 1401S or the other thumbnail 1401S and then an additional input is received, the thumbnail is determined to be selected and confirmed, and a consensus message is output. Subsequently, the AR service provision device 800 transmits information about both the ID and features of the thumbnail selected by the vehicle (through service platform). The called vehicle recognizes the candidate passenger corresponding to the transmitted ID of the thumbnail and tracks in real time the location of the candidate passenger recognized based on the features.

The passenger can reliably check the called vehicle with the naked eye. Therefore, the external features of the vehicle, which are displayed through the outside of the vehicle or displayed through the AR service provision device 800 as described with reference to FIG. D, are changed based on the customizing information. For example, the hat-shaped light on the called vehicle may be changed to a color set by the passenger, or the identification letters and/or the QR code for authentication may be displayed on the external or internal display of the vehicle.

According to an embodiment, in a case where the passenger is not included in the plurality of thumbnails provided to the AR service provision device 800, a 'selection-impossible input' may be performed using the provided user interface. In this manner, in response to the selection-impossible input applied to the plurality of thumbnails, the service platform 900 transmits an image-recapturing command to the called vehicle. In response to the image-recapturing command, the vehicle regenerates a thumbnail and transmits the regenerated thumbnail to the AR service provision device 800 through the service platform 900.

In addition, although not illustrated, in one or several embodiments, in response to the selection input applied to the thumbnail, the AR service provision device 800 may change a first AR image, which is based on the location information and vehicle information of the called vehicle, to a second AR image, which is based on the customizing information of the passenger, and render the resulting second AR image onto the called vehicle.

Accordingly, the selection by the passenger and the vehicle matching are performed as if simultaneously, and thus the passenger recognizes the called vehicle more intuitively.

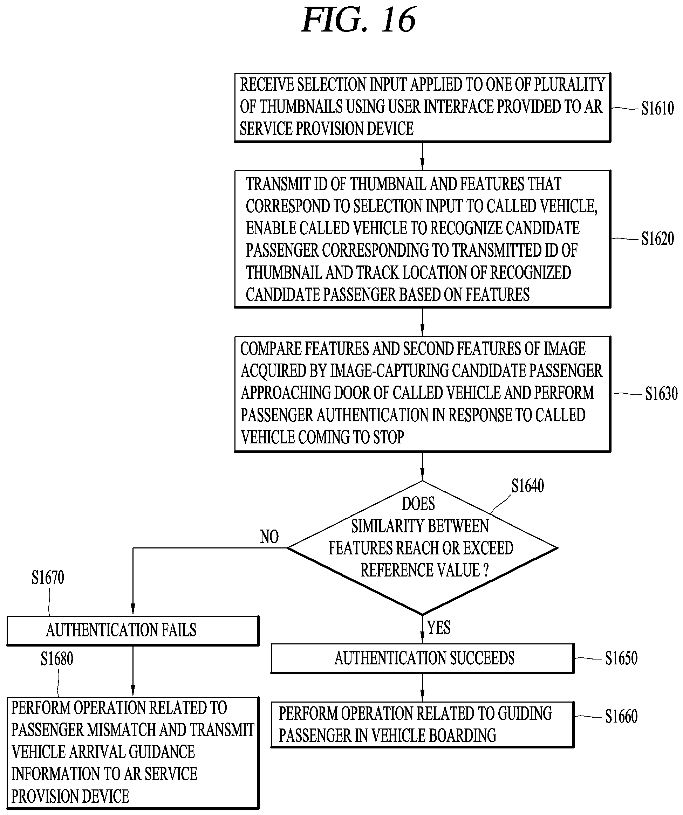

FIG. 16 is a flowchart that is referenced to describe a method of authenticating the passenger who called the vehicle based on the features of the selected thumbnail related to an embodiment of the present disclosure.

With reference to FIG. 16, the AR service provision device 800 receives a selection input applied to one of the plurality of thumbnails using the provided user interface (S1610).

An ID and features of a thumbnail, which corresponds to the selection input, are transmitted to the called vehicle through the service platform 900. The service platform 900 enables the called vehicle to recognize the candidate passenger corresponding to the ID of the thumbnail and to continuously track the location of the candidate passenger based on the features (the 'first features') (S1620).

At this point, the location of the candidate passenger continues to be tracked until the passenger boards or cancels boarding or until the passenger authentication is performed.

When transmitting information about both the ID and features of the thumbnail that corresponds to the selection input, the service platform 900 may transmit a consensus message to the AR service provision device 800. In addition, the service platform 900 may upload the information about the ID and features of the thumbnail that corresponds to the selection input onto at least one node engaged in communication, as well as onto the vehicle.

Next, in response to the called vehicle coming to a stop, the service platform 900 enables the called vehicle to compare the first features of the image searched for by the called vehicle based on the ID of the thumbnail corresponding to the selection input and the second features acquired from the captured image of the candidate passenger approaching the door of the called vehicle and to perform the passenger authentication (S1630).

At this point, the first features and the second features may be compared to analyze whether the number of the same features, among the first features and second features reaches or exceeds a predetermined value (for example, 7 or 8 out of 10). In addition, the first features and the second features may be compared to analyze whether the similarity between the first features and second features reaches or exceeds a predetermined rate (for example, 80%).

When it is determined, as a result of (S1610) of determining whether the similarity between the first features and the second features, that the above-mentioned reference value is reached or exceeded, the service platform 900 declares 'Authentication Succeeds' (S1650).

Accordingly, the service platform 900 may enable the vehicle to perform an operation related to guiding the passenger in vehicle boarding (S1660). For example, a welcome message "Welcome" may be output through the external E-Ink or the external display of the called vehicle. Alternatively, for example, the guidance is provided in such a manner as to unlock the door or scan the QR code. In one or several embodiments, the process of unlocking the door may include, as part thereof, QR code authentication or communication in compliance with UWB, WiFi, BT, or similar technologies between the vehicle and the AR service provision device 800 of the passenger.

When it is determined, as the result (S1610) of the determination, that the similarity between the first features and the second features does not reach the reference value, the service platform 900 declares "Authentication Fails" (S1670).

Accordingly, the service platform 900 enables the vehicle to perform an operation related to passenger mismatch and transmits vehicle arrival guidance information to the AR service provision device 800 (S1680). For example, the vehicle may display the mismatch message "You are not the correct passenger" through the external display of the vehicle. In addition, for example, acceptance information for extracting the second features and re-comparing the first features and the second features, as the previous step, may be displayed on the AR service provision device 800.

In addition, although not illustrated, when the authentication fails, through the selection input applied to the thumbnail, the passenger may be visually guided in vehicle boarding by reflecting the customized information in the vehicle, and the passenger may be authenticated depending on whether or not a UWB signal is detected.

In embodiments described below, the display of the vehicle may be included as the AR service provision device 800. In addition, in the embodiments described below, a plurality of AR service provision devices 800, for example, first and second AR service provision devices, may be included.

In an unmanned vehicle, a passenger needs to change the vehicle boarding or alighting location, to modify the destination, to request vehicle sharing, or to change the itinerary, such as by adding a destination. In this case, in the related art, the passenger is inconveniently required to push an in-vehicle call button to connect to a control service center and contact a counselor to make changes to the necessary itinerary via third party communication.

Accordingly, in the embodiments described below, a method is described in which, without the third party communication, the passenger interacts directly with the vehicle through the AR service provision device 800 to change the vehicle boarding or alighting location, to modify the destination, to request vehicle sharing, or to change the itinerary, such as by adding a destination.

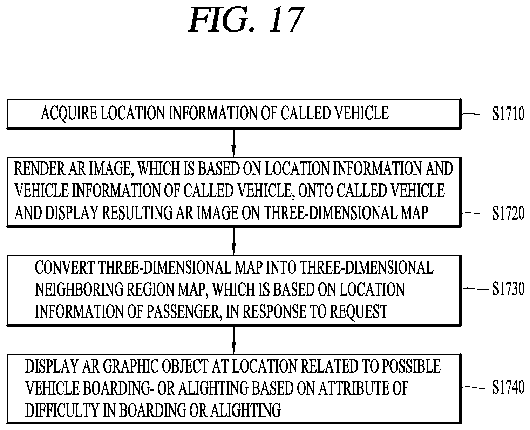

FIG. 17 is a flowchart that is referenced to describe a method of guiding toward and selecting the vehicle boarding location using three-dimensional map information related to an embodiment of the present disclosure.

Each step in FIG. 17 may be performed by the AR service provision device 800. In one or several embodiments, the AR service provision device 800 may display the three-dimensional map and communicate with or operate in conjunction with one or more nodes for providing the AR or MR service. In addition, the AR service provision device 800 may include an AR engine or renderer for rendering the AR object. In addition, unless otherwise described, it is assumed that the processor 830 of the AR service provision device 800 operates to perform each step in FIG. 17.

With reference to FIG. 17, the AR service provision device 800 may acquire in real time the location information of the called vehicle (S1710). To this end, the AR service provision device 800 may receive the location data directly from the called vehicle, or the service platform 900 may receive the GPS-based location data through one or more nodes.

In addition, the AR service provision device 800 may render the AR image, which is based on the acquired location information and vehicle information (and traveling information) of the called vehicle, onto the called vehicle, thereby displaying the resulting AR image on the three-dimensional map (S1720).

At this point, the called vehicle to be displayed on the three-dimensional map is intended to be displayed in the form of a bird's view on the three-dimensional map, taking into consideration the traveling information of the called vehicle, for example, the traveling direction and traveling speed. In addition, the external features, which are based on the customizing information preset by the passenger, are displayed on the called vehicle to be displayed on the three-dimensional map.

Subsequently, in response to the request, the AR service provision device 800 may convert the three-dimensional map into the three-dimensional neighboring region map, which is based on the location information of the passenger (S1730).

At this point, the location information of the passenger may refer to the GPS-based current location of the AR service provision device 800. In addition, the location information of the passenger may be a vehicle boarding (or alighting) location information that is input/set in advance through the AR service provision device 800.

The passenger can call an unmanned vehicle from an unfamiliar place or be dropped off by the unmanned vehicle at an unfamiliar place. For example, in a case where the unmanned vehicle is called from a place to which the passenger visits for the first time or where the unmanned vehicle is called during a night time span, the passenger may want to accurately inform the unmanned vehicle of his/her own current location or to check whether or not the current location is suitable for vehicle boarding or alighting.

Accordingly, in response to the passenger's request, the AR service provision device 800 may communicate with one or more nodes and collect three-dimensional map buildings, roads, polygon and text data related to terrains, and information about unique IDs of neighboring buildings and road sections in order to generate the three-dimensional neighboring region map, which is based on the location information of the passenger.

According to an embodiment, the AR service provision device 800 may provide an MR view for a specific location based on the input of the specific location on the three-dimensional neighboring region map.

To this end, the AR service provision device 800 may communicate with the DTaaS server (not illustrated) as one or more nodes, and enable the DTaaS server to operate in conjunction with a POI database in which POI service data for each building or each region included in map information are stored and to provide the MR view for the vicinity of the specific location.

Subsequently, the AR service provision device 800 may display (render) the AR graphic object at the location related to possible vehicle boarding or alighting on the three-dimensional neighboring region map, on the basis of the attribute of difficulty in vehicle boarding or alighting (S1740).

At this point, the attribute of difficulty in vehicle boarding or alighting may be determined based on whether or not the called vehicle can come to a stop. In addition, the attribute of difficulty in vehicle boarding or alighting may be determined on the basis of the location information of the passenger, three-dimensional map buildings, roads, polygon and text data related to terrains, and terrain features, such as unique IDs of neighboring buildings and road sections. The polygon and text data related to terrains may include data in a 3D polygon model which provides the volume of a structure and on whose surface text data may or may not be formed.

In an embodiment, the AR graphic object rendered onto the location related to possible vehicle boarding or alighting may include the first AR graphic object that indicates the boarding- or alighting-possible location, based on the attribute of difficulty in vehicle boarding or alighting, and the second AR graphic object that indicates the vehicle boarding- or alighting-impossible location.

In an embodiment, the AR service provision device 800 may change the vehicle boarding/alighting location by selecting the AR graphic object rendered onto the three-dimensional neighboring region map. Specifically, the AR service provision device 800 may cancel the existing vehicle boarding or alighting location and designate a new vehicle boarding or alighting location by transmitting a location, resulting from GPS-converting a location corresponding to the AR graphic object, to the vehicle.

In relation to FIG. 17, FIGS. 18 and 19 are views illustrating that the vehicle boarding location or the vehicle alighting location is recommended based on the attribute of difficulty in called-vehicle boarding or alighting, respectively.

The AR service provision device 800 may render the AR graphic object onto the location related to possible vehicle boarding or alighting in such a manner that recommendation or non-recommendation of vehicle boarding or alighting is provided on the three-dimensional neighboring region map based on the attribute of difficulty in vehicle boarding or alighting.

The AR service provision device 800 may render a corresponding real street view, that is, the MR image based on the three-dimensional neighboring region map, on the basis of the selection input applied to the AR graphic object indicating the recommendation or non-recommendation of vehicle boarding or alighting.

At this point, the attribute of difficulty in vehicle boarding or alighting may include at least one of the following: road information, building information, or terrain information on the three-dimensional neighboring region map. In addition, the recommended or non-recommended location for vehicle boarding or alighting, which is based on the attribute of difficulty in vehicle boarding or alighting, may be determined specifically based on three-dimensional map buildings, roads, polygon and text data related to terrains, unique IDs of neighboring buildings and road sections, the location information of the passenger, and the location information of the vehicle.

In addition, the attribute of difficulty in vehicle boarding or alighting may be used to have a broad meaning, encompassing all attributes that have an influence on whether or not the unmanned vehicle is capable of coming to a stop. For example, the attribute of difficulty may be related to a vehicle boarding or alighting location for public transportation, a shuttle station, a stopping-impossible section stipulated by the traffic laws, a section under construction, an accident-prone section, a section with a current highly congested traffic level, a section where a current vehicle-boarding service call occurs frequently, and a section with guide rails installed on walking paths.

According to an embodiment, the AR service provision device 800 may determine a recommended vehicle boarding or alighting by computing a walking distance for each location assigned a level of difficulty. For example, the recommended vehicle boarding or alighting locations are aligned in increasing order of distance from the location information of the passenger and in increasing order of the level of difficulty in vehicle boarding or alighting. Top several recommended vehicle boarding or alighting locations are finally determined from among the aligned recommended vehicle boarding or alighting locations.

According to an embodiment, the AR service provision device 800 may determine the non-recommended vehicle boarding or alighting location on the basis of traffic situation information. At this point, the recent traffic situation information collected by performing renewal after a predetermined time has elapsed from the vehicle's estimated time of arrival or after a predetermined distance has been traveled is used as the traffic situation information.

The AR service provision device 800 may render distinct coded colors onto the recommended vehicle boarding or alighting location and the non-recommended vehicle boarding or alighting location in such a manner that the passenger can intuitively recognize them. The passenger can intuitively recognize the attribute of difficulty in vehicle boarding or alighting by providing the three-dimensional neighboring region map and the AR object in this manner.

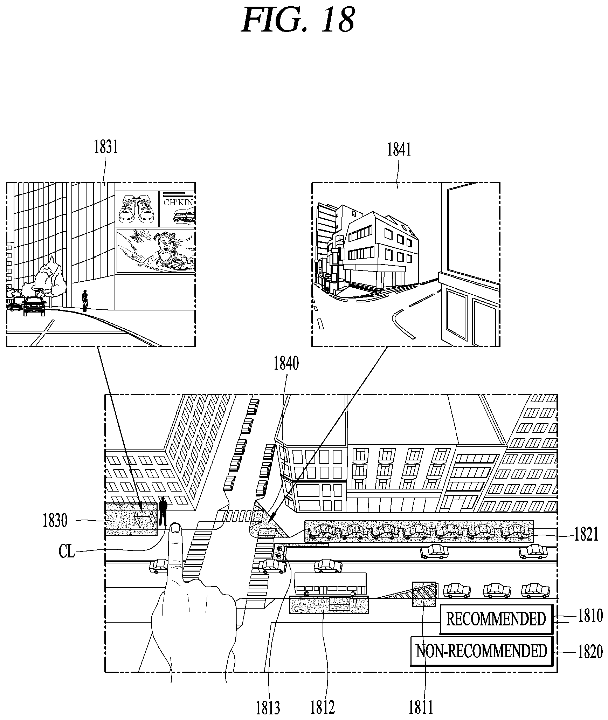

With reference to FIG. 18, first graphic objects 1811, 1812, and 1813, and 1830, which indicate a recommended vehicle boarding or alighting location on the three-dimensional neighboring region map based on location information CL of the passenger, are rendered. For example, the first graphic objects 1811, 1812, 1813, and 1830 may be displayed at locations that correspond to a stop-waiting section, a stop section such as a stop, a non-congested traffic section, and a ride-sharing dedicated section, respectively. In addition, second graphic objects 1821 and 1840 indicating non-recommended vehicle boarding or alighting locations on the three-dimensional neighboring region map based on the location information CL of the passenger may also be rendered. For example, the second graphic objects 1821 and 1840 may be displayed at locations that correspond to a congested traffic section and a section guide rails installed on walking paths, respectively.

In FIG. 18, when a selection input is applied to a recommendation icon 1810, only the first graphic objects 1811, 1812, 1813, and 1830, indicating only the recommended vehicle boarding or alighting locations, are displayed in a highlighted manner, and a graphic object indicating information about a non-recommended vehicle boarding or alighting location is hidden without being displayed.

In FIG. 18, when a selection input is applied to a non-recommendation icon 1820, only the second graphic objects 1821 and 1840, indicating only the non-recommended vehicle boarding or alighting locations, are displayed in a highlighted manner, and a graphic object indicating information about a recommended vehicle boarding or alighting location is hidden without being displayed.

In a case where a real view or an MR view for at least one of the recommended vehicle boarding or alighting location or the non-recommended vehicle boarding or alighting location, which is illustrated in FIG. 18, is present, the real view or the MR view is output when the corresponding location is selected. For example, in a case where a selection input is applied to a location where the first graphic object 1830 is displayed, a real view or an MR view 1831 from which a ride-sharing dedicated display is identified is popped up. In addition, for example, in a case where a selection input is applied to a location where the second graphic object 1840 is displayed, a real view or an MR view 1841 from which a display of guide rails installed on walking paths is identified is popped up.

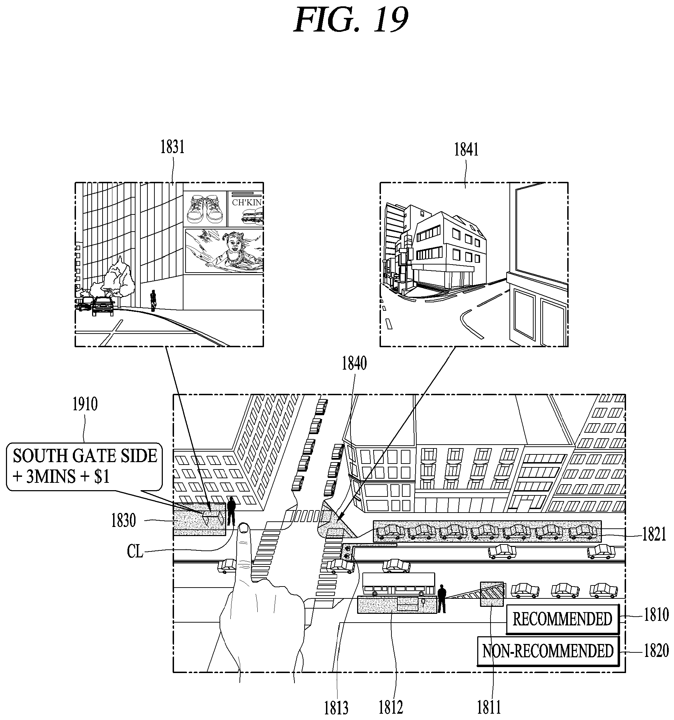

FIG. 19 illustrates that the three-dimensional neighboring region map, which is based on the location information CL of the passenger in FIG. 18, is applied to a vehicle alighting location at a destination. At this point, the location information CL of the passenger in FIG. 19 refers to a destination location, which is input/set in advance by the passenger.

In FIG. 19, when a selection input is applied to the first graphic object 1830, indicating the recommended vehicle alighting location, the AR service provision device 800 renders an AR word balloon image 1910, including the corresponding location information and additional information, such as additional traveling distance/time information and additional fare information, which are available when a change is made to the corresponding location. The AR service provision device 800 may transmit GPS-based location information, which results from conversion by matching to information about the changed vehicle alighting location, to the called vehicle, on the basis of the selection of a change to the vehicle alighting location, which is based on the AR word balloon image 1910 rendered onto the three-dimensional neighboring region map.

In this manner, the embodiments of the present disclosure may provide the three-dimensional neighboring region map based on the location information of the passenger in such a manner that the level of difficulty in called-vehicle boarding can be easily recognized. Furthermore, the embodiments may provide the recommended vehicle boarding or alighting location and/or the non-recommended vehicle boarding or alighting location to the passenger and provide the associated additional information through the AR image or the MR view in an intuitively recognizable manner.

According to an embodiment, the processor 830 of the AR service provision device 800 may change the vehicle boarding or alighting location based on the selection input applied to the AR graphic object and transmit information about the changed vehicle boarding or alighting location to the vehicle through the communication unit 810 in such a manner that the called vehicle performs an operation corresponding to the changed vehicle boarding or alighting location.

At this point, AR path information for guiding toward the vehicle boarding or alighting location is displayed on the three-dimensional map on the display 820 of the AR service provision device 800.

Specifically, in a case where a walking movement path is changed according to the changed vehicle boarding or alighting location, the AR service provision device 800 may display the walking movement path, which runs from the current location of the passenger or the current location of the called vehicle to the changed vehicle boarding or alighting location, in the form of an AR object on a road on the three-dimensional map.

In addition, although not illustrated, in a case where the level of traffic congestion at the vehicle boarding or alighting location, which is input/set in advance, is determined to be high after the called vehicle enters a "second street," guidance information may be output through the external E-Ink or the external display of the called vehicle in such a manner that the passenger walks a predetermined distance from the appointed vehicle boarding location. For example, the information, such as "This vehicle is moving a little further forward to stop" may be displayed through the hat-shaped light, the external E-Ink, or the external display of the vehicle.

According to an embodiment, in response to the called vehicle, onto which the AR image is rendered, entering the vehicle boarding-possible section, the processor 830 of the AR service provision device 800 may request the called vehicle to check the surrounding situation, which is based on the location information of the passenger, through the external camera of the called vehicle. Thereafter, the AR graphic object, indicating the recommended vehicle boarding or alighting location on the three-dimensional map, may be rendered, taking into consideration the level of difficulty in vehicle boarding or alighting based on the response to the request of the AR service provision device 800.

In this manner, according to the embodiments of the present disclosure, the level of difficulty in vehicle boarding at the vehicle boarding location, which is difficult to identify with two-dimensional map information can be identified. In addition, the real street view is rendered based on the three-dimensional map information and displayed. This greatly helps the passenger to structurally understand the surrounding environment even in a case where the passenger called the vehicle from a location unfamiliar to the passenger. In addition, the vehicle boarding or alighting location can be easily changed based on the three-dimensional map information, when necessary, and be recognized by the called vehicle.

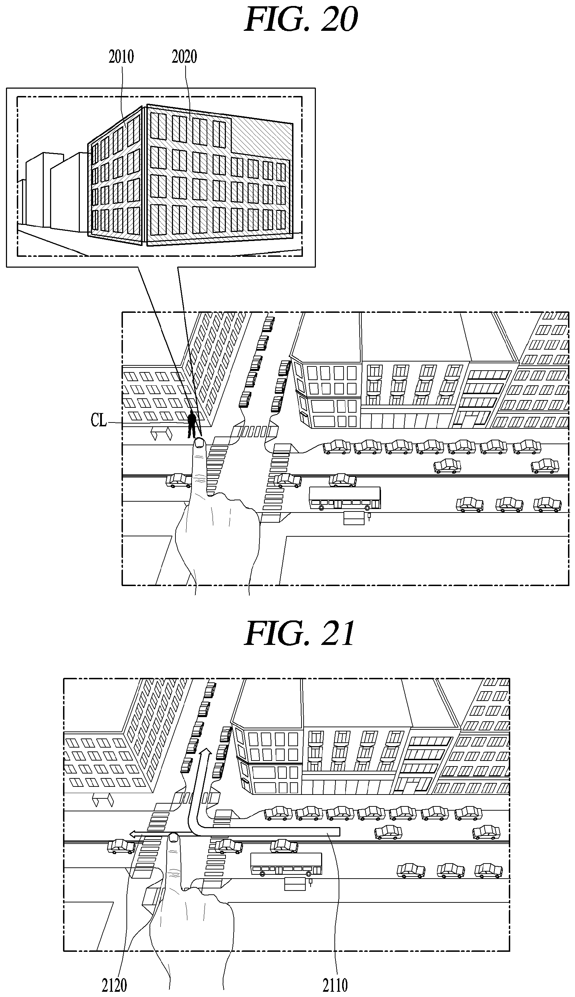

FIG. 20 is a view illustrating a method of selecting a direction for alighting the vehicle using a highlighted structure on the three-dimensional map related to the embodiment of the present disclosure.

In addition, FIG. 21 is a view illustrating a method of changing a path for the vehicle using the three-dimensional map information related to the embodiment of the present disclosure.

With reference to FIG. 20, a highlighted display is rendered onto a neighboring structure based on the location information CL of the passenger displayed on the three-dimensional neighboring region map. At this point, the neighboring structure is a structure that can be seen with the naked eye when the passenger alights the vehicle. Examples of the neighboring structure may include a neighboring building, a signboard, a building entrance, a stop, a sculpture, and the like. In addition, an ID or name of the corresponding structure may be displayed in the form of a word balloon in an augmented manner.

At this point, highlighted images 2010 and 2020 in distinguished colors are displayed on at least one of the directions of the front surface, the left lateral surface, the right lateral surface, and the rear surface of the structure. The passenger may accurately designate the direction for alighting the vehicle by selecting one of the highlighted images 2010 and 2020.

Specifically, the AR service provision device 800 recognizes a direction, matching the image 2010 of a first surface of the structure, as a vehicle alighting location on the basis of a selection input applied to one of the highlighted images 2010 and 2020 in distinguished colors, for example, to the image 2010 of the first surface and transmits information about the resulting vehicle alighting location to the vehicle. In a similar manner, the AR service provision device 800 may also recognize a direction, matching the image 2020 of a second surface, as the vehicle alighting location, and transmits information about the resulting vehicle alighting location to the vehicle. Accordingly, the passenger may more accurately designate the desired vehicle alighting direction.

To this end, the processor 830 of the AR service provision device 800 may render a plurality of AR images for designating the vehicle boarding or alighting direction onto a structure included in a real street view image. In addition, the processor 830 may determine the direction of a structure, corresponding to an AR image selected from among the plurality of AR images, as the vehicle boarding or alighting location. In addition, the processor 830 may operate in such a manner to transmit information about the vehicle boarding location in the direction of the structure, which is determined through the selection input, to the called vehicle through the communication unit 810.

After boarding the called vehicle, the passenger may also change a traveling path in a manner that is different from that in a vehicle setting, through the AR service provision device 800 (provided in the called vehicle).

With reference to FIG. 21, for example, in a state where a first traveling path 2110 is displayed on the MR map view in accordance with the vehicle setting, a second traveling path 2120 is generated on the basis of the input that changes the first traveling path, and one portion of the second traveling path 2120 is rendered in a manner that overlaps with the first traveling path 2110.

Subsequently, based on the selection input applied to the second traveling path 2120, the AR service provision device 800 deletes the display of the first traveling path 2110 from the MR map view and changes a traveling path along the second traveling path 2120. The AR service provision device 800 may transmit information about the second traveling path 2120, which results from the change, to the vehicle and thus may enable the vehicle to change the current traveling path.

Specifically, while the called vehicle travels after the passenger alights the called vehicle, a first carpet image indicating the current traveling path is displayed on the MR view map on the AR service provision device 800. Along with this, a second carpet image, indicating another traveling path that serves as a detour, may be displayed in a manner that overlaps with one portion of the first carpet image. At this point, the change to the other traveling path, serving as a detour, may be determined, taking into consideration both a traffic situation in the vicinity of the called vehicle and the time required to reach an intersection to change the traveling path from the first carpet image to the second carpet image.

The passenger may change the traveling path of the called vehicle by selecting the second carpet image displayed on the MR view map on the AR service provision device 800. In this case, a preview image, in which the called vehicle passes through the intersection along the selected detour on the MR view map, may be provided in the form of a three-dimensional image on the display 820 of the AR service provision device 800. Along with this, a message or voice, saying "Move to the detour?" may output, thereby guiding the passenger toward a final selection.

In addition, according to an embodiment, specifically, in a case where a destination change item is selected through the AR service provision device 800, the MR map view is displayed with a first destination, previously input/set, in the center. In this case, a plurality of vehicle alighting locations within a predetermined radius from the center of the first destination are recommended on the displayed MR map view, and AR image objects are rendered onto the plurality of recommended vehicle alighting locations, respectively. Next, when one is selected from among the plurality of recommended vehicle alighting locations, the AR service provision device 800 recognizes the corresponding location as a second destination and transmits location information of the second destination to the vehicle in such a manner that the vehicle alighting location is changed to the second destination.

According to the embodiments described above, the passenger can easily understand a nearby structure through the MR view map and can conveniently change the vehicle boarding or alighting location, thereby providing the resulting vehicle boarding or alighting location to the vehicle. In addition, the desired traveling path can be easily selected and changed after a plurality of traveling paths provided through the MR view map are checked.

According to one or several embodiments of the present disclosure, a method of accurately recognizing the location of the second passenger waiting at a stopover and transmitting the recognized location to the vehicle is described. This method is similar to the above-described method of recognizing and changing the vehicle boarding location in that the second passenger waiting at the stopover 'has not yet boarded the vehicle,' but is different from the above-described method in that the first passenger 'has already boarded the vehicle.' That is, the location of the stopover is set by the first passenger, and therefore, the second passenger is restricted from changing his/her own location.

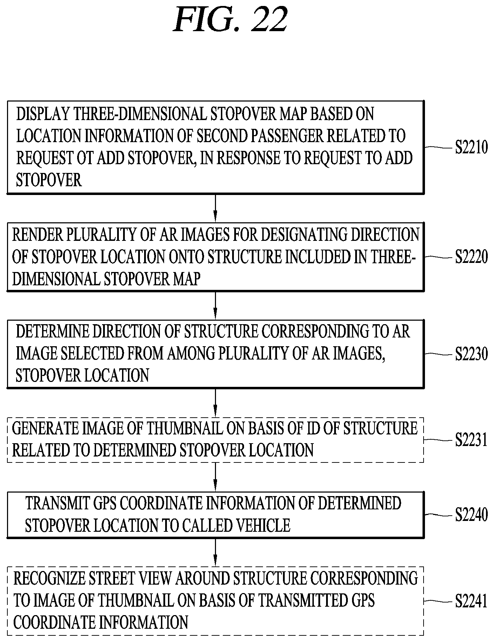

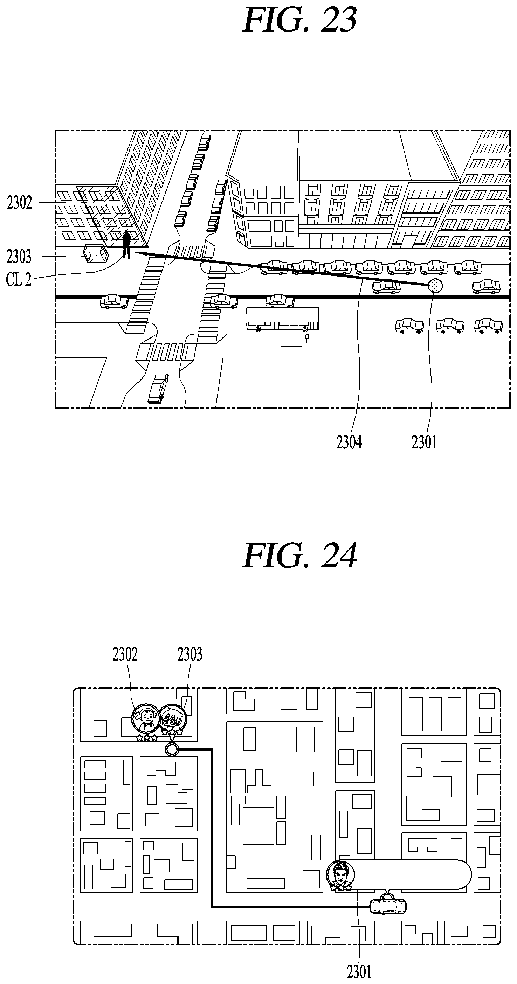

FIGS. 22 and 23 are a flowchart and a view, respectively, that are referenced to describe a method of providing location information of the second passenger using the three-dimensional map information related to the embodiment of the present disclosure.

First, with reference to FIG. 22, in response to the first passenger' request to add a stopover, the AR service provision device 800 may display a three-dimensional stopover map, which is based on location information of the second passenger related to the request to add a stopover (S2210).

At this point, the request to add a stopover is performed through the AR service provision device 800 of the first passenger. However, the location information of the second passenger is selected and provided through the AR service provision device 800 of the second passenger. Accordingly, in response to approaching a stopover location, which is input/set through the AR service provision device 800 of the first passenger, the right to control is assigned to the AR service provision device 800 of the second passenger through the AR service provision device 800 of the first passenger, the service platform, or the vehicle. At this point, the assignment of the right to control refers to the restricted assignment of the right to control an operation related to the location of the stopover.

Accordingly, in the AR service provision device 800 of the second passenger, a plurality of AR images for allocating the direction of the stopover location to a structure included in the three-dimensional stopover map may be rendered onto the MR view map (S2220).

The reason for this is to provide the accurate location information of the second passenger using a structure on the MR map view, on the assumption that the location of the second passenger is not changed.

Specifically, with reference to FIG. 23, highlighted images 2302 and 2303 may be displayed, based on location information CL2 of the second passenger, on a nearby structure on the MR view map displayed on the AR service provision device 800. The second passenger may select a highlighted image, corresponding to a structure closer to the current location of the second passenger, from among the highlighted images 2302 and 2303 and provide his/her own current location.

For example, in FIG. 23, in a case where a selection input is applied to the highlighted image 2302 displayed at the main entrance of a building, the AR service provision device 800 transmits information about the main entrance to the called vehicle, and thus, an initial stopover location 2301 stored in the called vehicle is changed to a location corresponding to the highlighted location 2302.

With reference back to FIG. 22, the AR service provision device 800 may determine the direction of the structure, corresponding to the AR image selected from among the plurality of highlighted AR images on the MR view map, as the stopover location (S2230).

In one or several embodiments, the AR service provision device 800 may generate a thumbnail image on the basis of the ID of the structure related to the determined stopover location (S2240). However, at the request of the second passenger, the AR service provision device 800 may operate to selectively perform this operation.

Subsequently, the AR service provision device 800 transmits GPS coordinate information of the determined stopover location to the called vehicle (S2240). Accordingly, the vehicle may recognize the stopover location at which the second passenger waits, thereby guiding the second passenger in vehicle boarding. Operations related to guiding the second passenger in vehicle boarding are described as being the same as or similar to those in the embodiments, which are described with reference to FIGS. 11 to 16.

In one or several embodiments, the vehicle may recognize a street view in the vicinity of the structure, corresponding to the thumbnail image, on the basis of the GPS coordinate information transmitted from the AR service provision device 800.

Specifically, while traveling toward the stopover location on the basis of the transmitted GPS coordinate information, the vehicle may accurately travel from the corresponding location toward the location of the second passenger through the street view in the vicinity of the structure when the structure corresponding to the thumbnail image is recognized by the first passenger or the AR service provision device 800 of the vehicle. While approaching the corresponding location, the vehicle may finally determine the stopover location, taking into consideration the attribute of difficulty in vehicle boarding, and may perform an operation for guiding the second passenger in vehicle boarding.

When the stopover is completely added, the stopover location, set by the first passenger, and information about the computed estimated time of arrival are transferred, as itinerary information, to the AR service provision device 800 of the second passenger through the AR service provision device 800 of the first passenger.

According to an embodiment, an AR view or MR view for guiding toward the changed vehicle boarding location at the stopover may be provided to the AR service provision device 800 of the second passenger, taking into consideration the attributes of difficulty in vehicle boarding, such as whether or not the stopover location set by the first passenger is a vehicle boarding-impossible section. That is, when the location of the second passenger is accurately set through the AR service provision device 800 of the first passenger, there is no need to assign the right to control to the second passenger.

Conversely, in a case where the right to control is assigned to the second passenger and where the stopover location is accurately transferred through the AR service provision device 800 of the second passenger, for example, in FIG. 23, in response to applying the input to the highlighted image 2302, feature information of the highlighted structure may be transmitted to the vehicle. The reason for this is that, for example, the first passenger and the vehicle do not know the external features of the second passenger. Therefore, the accurate vehicle boarding location is instead determined with a structure in the vicinity of the street at which the second passenger waits.

In FIG. 23, when the stopover location is finally determined as the stopover location to which the stopover location 2301, initially input/set, is changed by the second passenger, that is, as the location of the structure matching the highlighted image 2302, a traveling path 2304 from the first location 2301 to the second location 2302 may be displayed on the MR view map.

When a structure is not present in the vicinity of the second passenger, GPS-based coordinate information of the AR service provision device 800 of the second passenger, or directly input location information may be transmitted to the vehicle, thereby changing the stopover location.

FIG. 24 is a view that is referenced to describe the displaying of a ride-sharing applicant through the use of the three-dimensional map information related to the embodiment of the present disclosure.

For example, in the case of an unmanned high-occupancy vehicle, a first thumbnail 2301 and second and third thumbnails 2302 and 2303 may be rendered onto the MR view map in such a manner that the first passenger selects a ride-sharing passenger from among a plurality of candidate passengers who apply for ride-sharing. The first thumbnail 2301 indicates the location of the first passenger that has already boarded the vehicle, and the second and third thumbnails 2302 and 2303 indicate the locations of candidate passengers, respectively.

At this point, preference information (for example, a grade or the like) related to the selection of one from among the candidate passengers may be displayed together on the second and third thumbnails 2302 and 2303. When one candidate passenger is selected on the basis of a selection input applied to one of the second and third thumbnails 2302 and 2303, the location of the candidate passenger may be determined based on the attribute of difficulty in vehicle boarding or alighting, taking into consideration the external features of the candidate passenger and the surrounding environment, which are recognized through the external camera in the vehicle.

In one or several embodiments, in a case where the first passenger approves a ride-sharing request, a carpet image 2301 indicating a traveling path to the location of the determined candidate passenger may be displayed on the MR view map.

Although not illustrated, in a case where an emergency situation occurs while the called vehicle travels, emergency action protocols for quickly controlling the unmanned vehicle from the outside may be integrated into augmented reality (AG) through the camera in the AR service provision device 800 of a rescue team.

In another embodiment, in response to detecting the opening of the door of the vehicle, as an unexpected action of the passenger while the called vehicle travels, a pull-over process may be performed. Thus, a nearby location where the called vehicle can come to a stop may be displayed on the MR view map. Then, related information may be provided to the passenger, taking into consideration the attribute of difficulty in vehicle alighting.

The above-described method of providing a vehicle calling service may be provided in the form of a computer program stored on a computer-readable recording medium for execution on a computer. The computer-readable recording medium may be a medium on which a program executable on a computer can be permanently stored or on which a program can be temporarily stored for execution or download. In addition, examples of the computer-readable recording medium may include various recording means or storage means formed by combining one or several hardware components. The computer-readable recording medium is not limited to a medium capable of direct access to a computer system. The computer-readable recording medium may also be present across a network in a distributed manner. Examples of the computer-readable recording medium may include a hard disk, a magnetic medium, such as a floppy disk or a magnetic tape, an optical recording medium, such as a CD-ROM or a DVD, a magnetic-optical medium, such as a floptical disk, a ROM, a RAM, a flash memory, and similar storage devices. These storage devices may be configured to store program commands. In addition, other examples of the computer-readable recording medium may include a recording medium and a storage medium that are managed by an application store, distributing applications, and by a site, a server, and the like that supply and distribute various software items.

As described above, the method of providing a vehicle calling service, the system for providing a vehicle calling service, and the AR service provision device 800 for the method and the system enable seamless remote interactions between the unmanned vehicle and the passenger who has not yet boarded the unmanned vehicle. Furthermore, in terms of convenience, mutual recognition enhances vehicle boarding authentication and facilitates changes to the vehicle boarding or alighting location.

In addition, according to the embodiments of the present disclosure, the passenger can accurately identify a called vehicle, and the called vehicle also specifies and authenticates the passenger in advance through a thumbnail selected by the passenger before boarding. This can facilitate interaction and authentication, enabling the unmanned vehicle to provide high-quality services, such as accurately guiding the passenger in vehicle boarding.

In addition, according to the embodiments of the present disclosure, in a case where the vehicle boarding or alighting location, appointed by the passenger, is deemed inappropriate as the vehicle boarding or alighting location, the location appropriate for boarding or alighting can be accurately displayed using the AR and MR technologies, and the traveling path, resulting from the change, can be intuitively recognized.

In addition, according to one or several of the embodiments of the present disclosure, in a case where the first passenger designates a stopover, the second passenger can also provide the location of the stopover. In a situation where the first passenger does not know the second passenger, riding-sharing can also be seamlessly facilitated using the AR and MR technologies.

The range of possible additional applications of the present disclosure will be apparent from the detailed description provided above. However, various modifications and alterations to the present disclosure within the scope of its technical idea would be clearly understandable to a person of ordinary skill in the art. Therefore, it should be noted that the detailed description and specific embodiments, such as preferred embodiments of the present disclosure, are provided in an exemplary manner.

The features, structures, effects, and the like, described above in the embodiments, are included in at least one embodiment, and are not necessarily limited only to a single embodiment. Moreover, the feature, structure, effect, and similar attributes, which are described in each embodiment, can be implemented in other embodiments through combination or modification by a person of ordinary skill in the art to which the embodiments pertain. Therefore, matters related to this combination and modification should be interpreted as being included within the scope of the present disclosure.

In addition, the embodiments are described above in a focused manner and are intended for illustration only, without imposing any limitation on the present disclosure. It would be apparent to a person of ordinary skill in the art to which the present disclosure pertains that various modifications and applications, which are not described illustratively, are possible within the scope of the claims. For example, each constituent element specifically employed in the embodiments can be implemented in a modified manner. Differences related to these modifications and applications should be interpreted as falling within the scope of the present disclosure, as defined by the following claims.

## Claims

1. A system (700) for providing a vehicle calling service, the system comprising:
an augmented reality, AR, service provision device (800); and
a service platform (900) that is configured to operate in conjunction with the AR service provision device (800),
wherein the AR service provision device (800) is configured to render an AR image, which is based on location information and vehicle information of a called vehicle (100), onto the called vehicle (100), and configured to display the resulting AR image on a three-dimensional map, and
wherein, in response to the called vehicle (100) entering a vehicle boarding-possible section based on location information of a passenger, the service platform (900) is configured to request the called vehicle (100) to inclusively image-capture a plurality of candidate passengers, using a camera (300) in the called vehicle (100) and to generate a plurality of thumbnails each corresponding to a respective candidate passenger, and to provide a user interface for selecting one from among the plurality of generated thumbnails to the AR service provision device (800),
**characterized in that** the AR service provision device (800) is configured to receive a selection input applied to one of the plurality of thumbnails using the user interface, and to transmit information about the thumbnail selected by the AR service provision device (800) to the called vehicle (100), including an ID and features of the thumbnail corresponding to the selection input, and to enable the called vehicle (100) to recognize a candidate passenger corresponding to the transmitted ID of the thumbnail, and to track location of the recognized candidate passenger based on the features,
wherein in response to the called vehicle (100) coming to a stop, the service platform (900) is configured to enable the called vehicle (100) to compare first features, corresponding to the thumbnail corresponding to the selection input, and second features acquired from a captured image of the candidate passenger approaching a door of the called vehicle (100) and to perform passenger authentication.

2. The system (700) of claim 1, wherein in the vehicle boarding-possible section, an image-capturing range of the camera (300) provided in the called vehicle (100) and an image-capturing range of a camera (300) provided in the AR service provision device (800) fall within a distance range where the called vehicle (100) and the AR service provision device (800) are able to image-capture each other.

3. The system (700) of claim 1, wherein at the time of vehicle calling, the service platform (900) is configured to transmit additional information, input from the AR service provision device (800), to the called vehicle (100), and to enable the called vehicle (100) to extract a region related to the additional information from an image captured by the camera (300) in the called vehicle (100), and to generate the plurality of thumbnails, with the extracted region being included.

4. The system (700) of claim 1, wherein in response to the selection input, the AR service provision device (800) is configured to change a first AR image, which is based on the location information and vehicle information of the called vehicle (100), to a second AR image, which is based on customizing information of the passenger, and renders the resulting second AR image onto the called vehicle (100).

5. The system (700) of claim 1, wherein in response to a selection-impossible applied to the plurality of thumbnails, the service platform (900) is configured to transmit an image-recapturing command to the called vehicle (100) and to enable the called vehicle (100) to provide a thumbnail, corresponding to the image-recapturing command, to the AR service provision device (800).

6. The system (700) of claim 1, wherein in response to the called vehicle (100) determining, as a result of the comparison, that the similarity between the first features and the second features reaches or exceeds a reference value, the service platform (900) is configured to enable the called vehicle (100) to perform an operation related to guiding the passenger in vehicle boarding.

7. The system (700) of claim 1, wherein in response to the called vehicle (100) determining, as a result of the comparison, that the similarity between the first features and the second features does not reach a reference value, the service platform (900) is configured to enable the called vehicle (100) to perform an operation related to passenger mismatch, and to transmit vehicle arrival guidance information to the AR service provision device (800).

8. A method of providing a vehicle calling service, the method comprising:
a step of acquiring location information of a called vehicle (100);
a step of rendering an augmented reality, AR, image, which is based on location information and vehicle information of the called vehicle (100), onto the called vehicle (100) and displaying the resulting AR image on a three-dimensional map;
a step of determining that the called vehicle (100) onto which the AR image is rendered enters a vehicle boarding-possible section;
a step of requesting the called vehicle (100) to inclusively image-capture a plurality of candidate passengers, using a camera (300) in the called vehicle (100) and to generate a plurality of thumbnails each corresponding to a respective candidate passenger;
a step of providing a user interface for selecting one from among the plurality of generated thumbnails to an AR service provision device (800) ; and
a step of transmitting information about the thumbnail selected by the AR service provision device (800) to the called vehicle (100) and enabling the called vehicle (100) to track location of a candidate passenger,
**characterized in that**
the step of transmitting the information about the thumbnail selected by the AR service provision device (800) to the called vehicle (100) and enabling the called vehicle (100) to track the location of the candidate passenger comprises:
a step of transmitting an ID and features of a thumbnail, which is selected through the user interface, to the called vehicle (100); and
a step of enabling the called vehicle (100) to recognize a candidate passenger corresponding to the transmitted ID of the thumbnail and to track location of the recognized candidate passenger based on the features,
and the method further comprises:
a step of recognizing that the called vehicle (100) comes to a stop; and
a step of enabling the called vehicle (100) to compare first features, corresponding to the selected thumbnail, and second features acquired from a captured image of the candidate passenger approaching a door of the called vehicle (100) and to perform passenger authentication.

9. The method of claim 8, wherein the step of determining that the called vehicle (100) enters the vehicle boarding-possible section is a step of determining that an image-capturing range of the camera (300) provided in the called vehicle (100) and an image-capturing range of a camera provided in the AR service provision device (800) fall within a distance range where the called vehicle (100) and the AR service provision device (800) are able to image-capture each other.

10. The method of claim 8, wherein the step of requesting the called vehicle to inclusively image-capture the plurality of candidate passengers, using the camera (300) in the called vehicle (100) and to generate the plurality of thumbnails comprises:
a step of transmitting additional information, input from the AR service provision device (800), to the called vehicle (100) at the time of vehicle calling; and
a step of enabling the called vehicle (100) to extract a region related to the additional information from an image captured by the camera (300) in the called vehicle (100), and to generate the plurality of thumbnails, with the extracted region being included.

11. The method of claim 8, further comprising:
a step of receiving a selection-impossible input applied to the plurality of thumbnails through the user interface; and
a step of transmitting an image-recapturing command to the called vehicle (100) and re-providing a thumbnail, corresponding to the image-recapturing command, to the AR service provision device (800).

## Patentansprüche

1. System (700) zur Bereitstellung eines Fahrzeugrufdienstes, wobei das System aufweist:
eine Erweiterte-Realität, AR, Dienstbereitstellungsvorrichtung (800); und
eine Dienstplattform (900), die konfiguriert ist, in Verbindung mit der AR-Dienstbereitstellungsvorrichtung (800) zu arbeiten,
wobei die AR-Dienstbereitstellungsvorrichtung (800) konfiguriert ist, ein AR-Bild, das auf Standortinformationen und Fahrzeuginformationen eines gerufenen Fahrzeugs (100) basiert, auf das gerufene Fahrzeug (100) zu rendern, und konfiguriert ist, das resultierende AR-Bild auf einer dreidimensionalen Karte anzuzeigen, und
wobei als Reaktion darauf, dass das gerufene Fahrzeug (100) basierend auf Standortinformationen eines Fahrgastes in einen Abschnitt eines möglichen Fahrzeugeinstiegs einfährt, die Dienstplattform (900) konfiguriert ist, das gerufene Fahrzeug (100) aufzufordern, unter Verwendung einer Kamera (300) im gerufenen Fahrzeug (100) mehrere Kandidaten-Fahrgäste umfassend aufzunehmen und mehrere Miniaturansichten zu erzeugen, die jeweils einem entsprechenden potentiellen Fahrgast entsprechen, und der AR-Dienstbereitstellungsvorrichtung (800) eine Benutzeroberfläche zum Auswählen von einer aus den mehreren erzeugten Miniaturansichten bereitzustellen, **dadurch gekennzeichnet, dass** die AR-Dienstbereitstellungsvorrichtung (800) konfiguriert ist, eine Auswahleingabe zu empfangen, die auf eine der mehreren Miniaturansichten unter Verwendung der Benutzeroberfläche angewendet wird, und Informationen über die von AR-Dienstbereitstellungsvorrichtung (800) ausgewählte Miniaturansicht an das gerufene Fahrzeug (100) zu übertragen, einschließlich einer ID und Merkmalen der Miniaturansicht, die der Auswahleingabe entspricht, und es dem gerufenen Fahrzeug (100) zu ermöglichen, einen Kandidaten-Fahrgast zu erkennen, der der übertragenen ID der Miniaturansicht entspricht, und den Standort des erkannten Kandidaten-Fahrgastes basierend auf den Merkmalen zu verfolgen,
wobei als Reaktion darauf, dass das gerufene Fahrzeug (100) zum Stillstand kommt, die Dienstplattform (900) konfiguriert ist, es dem gerufenen Fahrzeug (100) zu ermöglichen, erste Merkmale, die der der Auswahleingabe entsprechenden Miniaturansicht entsprechen, mit zweiten Merkmalen zu vergleichen, die aus einem aufgenommenen Bild des Kandidaten-Fahrgastes erfasst werden, der sich einer Tür des gerufenen Fahrzeugs (100) nähert, und eine Fahrgastauthentifizierung durchzuführen.

2. System (700) nach Anspruch 1, wobei in dem Abschnitt eines möglichen Fahrzeugeinstiegs, ein Bildaufnahmebereich der Kamera (300), die im gerufenen Fahrzeug (100) vorgesehen ist, und ein Bildaufnahmebereich einer Kamera (300), die in der AR-Dienstbereitstellungsvorrichtung (800) vorgesehen ist, in einen Entfernungsbereich fallen, in dem das gerufene Fahrzeug (100) und die AR-Dienstbereitstellungsvorrichtung (800) sich gegenseitig aufnehmen können.

3. System (700) nach Anspruch 1, wobei zum Zeitpunkt des Fahrzeugrufs die Dienstplattform (900) konfiguriert ist, zusätzliche Informationen, die von der AR-Dienstbereitstellungsvorrichtung (800) eingegeben werden, an das gerufene Fahrzeug (100) zu übertragen, und es dem gerufenen Fahrzeug (100) zu ermöglichen, einen Bereich, der mit den zusätzlichen Informationen in Zusammenhang steht, aus einem von der Kamera (300) im gerufenen Fahrzeug (100) aufgenommenen Bild zu extrahieren und die mehreren Miniaturansichten zu erzeugen, wobei der extrahierte Bereich enthalten ist.

4. System (700) nach Anspruch 1, wobei als Reaktion auf die Auswahleingabe die AR-Dienstbereitstellungsvorrichtung (800) konfiguriert ist, ein erstes AR-Bild, das auf den Standortinformationen und Fahrzeuginformationen des gerufenen Fahrzeugs (100) basiert, in ein zweites AR-Bild zu ändern, das auf den Kundenanpassungsinformationen des Fahrgastes basiert, und das resultierende zweite AR-Bild auf das gerufene Fahrzeug (100) zu rendern.

5. System (700) nach Anspruch 1, wobei als Reaktion auf eine Auswahlunmöglichkeit, die auf die mehreren Miniaturansichten angewendet wird, die Dienstplattform (900) konfiguriert ist, einen Befehl zur erneuten Bildaufnahme an das gerufene Fahrzeug (100) zu übertragen und es dem gerufenen Fahrzeug (100) zu ermöglichen, eine Miniaturansicht, die dem Befehl zur erneuten Bildaufnahme entspricht, der AR-Dienstbereitstellungsvorrichtung (800) bereitzustellen.

6. System (700) nach Anspruch 1, wobei als Reaktion darauf, dass das gerufene Fahrzeug (100) infolge des Vergleichs feststellt, dass die Ähnlichkeit zwischen den ersten Merkmalen und den zweiten Merkmalen einen Referenzwert erreicht oder überschreitet, die Dienstplattform (900) konfiguriert ist, es dem gerufenen Fahrzeug (100) zu ermöglichen, einen Vorgang durchzuführen, der mit der Führung des Fahrgastes beim Fahrzeugeinstieg zusammenhängt.

7. System (700) nach Anspruch 1, wobei als Reaktion darauf, dass das gerufene Fahrzeug (100) infolge des Vergleichs feststellt dass die Ähnlichkeit zwischen den ersten Merkmalen und den zweiten Merkmalen einen Referenzwert nicht erreicht, die Dienstplattform (900) konfiguriert ist, es dem gerufenen Fahrzeug (100) zu ermöglichen, einen Vorgang durchzuführen, die mit einer Fahrgast-Nichtübereinstimmung zusammenhängt, und Fahrzeugankunfts-Leitinformationen an die AR-Dienstbereitstellungsvorrichtung (800) zu übertragen.

8. Verfahren zur Bereitstellung eines Fahrzeugrufdienstes, wobei das Verfahren aufweist:
einen Schritt zum Erfassen von Standortinformationen eines gerufenen Fahrzeugs (100); einen Schritt zum Rendern eines Bildes erweiterter Realität, AR, das auf den Standortinformationen und Fahrzeuginformationen des gerufenen Fahrzeugs (100) basiert, auf das gerufene Fahrzeug (100) und zum Anzeigen des resultierenden AR-Bildes auf einer dreidimensionalen Karte;
einen Schritt zum Bestimmen, dass das gerufene Fahrzeug (100), auf das das AR-Bild gerendert wird, in einen Abschnitt eines möglichen Fahrzeugeinstiegs einfährt;
einen Schritt zum Auffordern des gerufenen Fahrzeugs (100), unter Verwendung einer Kamera (300) im gerufenen Fahrzeug (100) mehrere Kandidaten-Fahrgäste umfassend aufzunehmen und mehrere Miniaturansichten zu erzeugen, die jeweils einem entsprechenden Kandidaten-Fahrgast entsprechen;
einen Schritt zum Bereitstellen einer Benutzeroberfläche zum Auswählen von einer aus den mehreren erzeugten Miniaturansichten für ein AR-Dienstbereitstellungsvorrichtung (800); und
einen Schritt zum Übertragen von Informationen über die von der AR-Dienstbereitstellungsvorrichtung (800) ausgewählte Miniaturansicht an das gerufene Fahrzeug (100) und zum Ermöglichen, dass das gerufene Fahrzeug (100) den Standort eines Kandidaten-Fahrgastes verfolgt,
**dadurch gekennzeichnet, dass**
der Schritt zum Übertragen der Informationen über die von der AR-Dienstbereitstellungsvorrichtung (800) ausgewählte Miniaturansicht an das gerufene Fahrzeug (100) und zum Ermöglichen, dass das gerufene Fahrzeug (100) den Standort des Kandidaten-Fahrgastes verfolgt, aufweist:
einen Schritt zum Übertragen einer ID und von Merkmalen einer Miniaturansicht, die über die Benutzeroberfläche ausgewählt wird, an das gerufene Fahrzeug (100); und
einen Schritt zum Ermöglichen, dass das gerufene Fahrzeug (100) einen Kandidaten-Fahrgast erkennt, der der übertragenen ID der Miniaturansicht entspricht, und den Standort des erkannten Kandidaten-Fahrgastes basierend auf den Merkmalen verfolgt, und das Verfahren ferner aufweist:
einen Schritt zum Erkennen, dass das gerufene Fahrzeug (100) zum Stillstand kommt; und
einen Schritt zum Ermöglichen, dass das gerufene Fahrzeug (100) erste Merkmale, die der ausgewählten Miniaturansicht entsprechen, mit zweiten Merkmalen vergleicht, die aus einem aufgenommenen Bild des Kandidaten-Fahrgastes erfasst werden, der sich einer Tür des gerufenen Fahrzeugs (100) nähert, und eine Fahrgastauthentifizierung durchführt.

9. Verfahren nach Anspruch 8, wobei der Schritt zum Bestimmen, dass das gerufene Fahrzeug (100) in den Abschnitt eines möglichen Fahrzeugeinstiegs einfährt, ein Schritt zum Bestimmen ist, dass ein Bildaufnahmebereich der Kamera (300), die im gerufenen Fahrzeug (100) vorgesehen ist, und ein Bildaufnahmebereich einer Kamera (300), die in der AR-Dienstbereitstellungsvorrichtung (800) vorgesehen ist, in einen Entfernungsbereich fallen, in dem das gerufene Fahrzeug (100) und die AR-Dienstbereitstellungsvorrichtung (800) sich gegenseitig aufnehmen können.

10. Verfahren nach Anspruch 8, wobei der Schritt zum Auffordern des gerufenen Fahrzeugs (100), unter Verwendung der Kamera (300) im gerufenen Fahrzeug (100) mehrere Kandidaten-Fahrgäste umfassend aufzunehmen und mehrere Miniaturansichten zu erzeugen, aufweist:
einen Schritt zum Übertragen zusätzlicher Informationen, die von der AR-Dienstbereitstellungsvorrichtung (800) eingegeben werden, an das gerufene Fahrzeug (100) zum Zeitpunkt des Fahrzeugrufs; und
einen Schritt zum Ermöglichen, dass das gerufene Fahrzeug (100) einen Bereich, der mit den zusätzlichen Informationen in Zusammenhang steht, aus einem von der Kamera (300) im gerufenen Fahrzeug (100) aufgenommenen Bild extrahiert und die mehreren Miniaturansichten erzeugt, wobei der extrahierte Bereich enthalten ist.

11. Verfahren nach Anspruch 8, das ferner aufweist:
einen Schritt zum Empfangen einer Eingabe einer Auswahlunmöglichkeit, die auf die mehreren Miniaturansichten angewendet wird; und
einen Schritt zum Übertragen eines Befehls zur erneuten Bildaufnahme an das gerufene Fahrzeug (100) und zum erneuten Bereitstellen Miniaturansicht, die dem Befehl zur erneuten Bildaufnahme entspricht, an die AR-Dienstbereitstellungsvorrichtung (800).

## Revendications

1. Système (700) de fourniture d'un service de VTC, ledit système comprenant :
un dispositif de fourniture de service de réalité augmentée (RA) (800) ; et
une plateforme de services (900) configurée pour fonctionner conjointement avec le dispositif de fourniture de services de RA (800),
où le dispositif de fourniture de services de RA (800) est configuré pour restituer une image en RA, basée sur des informations de localisation et des informations relatives à un véhicule appelé (100), vers ledit véhicule appelé (100), et pour afficher l'image en RA résultante sur une carte tridimensionnelle, et
où, en réaction à la pénétration du véhicule appelé (100) dans une zone d'embarquement possible sur la base des informations de localisation d'un passager, la plateforme de services (900) est configurée pour demander au véhicule appelé (100) de capturer une image englobant une pluralité de passagers candidats, au moyen d'une caméra (300) dans le véhicule appelé (100), et pour générer une pluralité de miniatures correspondant chacune à un passager candidat respectif, et fournir au dispositif de fourniture de services de RA (800) une interface d'utilisateur permettant de sélectionner une miniature parmi la pluralité de miniatures générées,
**caractérisé en ce que** le dispositif de fourniture de services de RA (800) est configuré pour recevoir une entrée de sélection appliquée à l'une des miniatures de la pluralité au moyen de l'interface d'utilisateur, et pour transmettre au véhicule appelé (100) des informations relatives à la miniature sélectionnée par le dispositif de fourniture de services de RA (800), comprenant un identifiant et des caractéristiques de la miniature correspondant à l'entrée de sélection, et permettre au véhicule appelé (100) de reconnaître un passager candidat correspondant à l'identifiant de miniature transmis, et de suivre la localisation du passager candidat reconnu sur la base des caractéristiques,
où, en réaction à un du véhicule appelé (100), la plateforme de services (900) est configurée pour permettre au véhicule appelé (100) de comparer des premières caractéristiques, correspondant à la miniature correspondant à l'entrée de sélection, et des deuxièmes caractéristiques acquises à partir d'une image capturée du passager candidat s'approchant d'une porte du véhicule appelé (100), et d'exécuter une authentification de passager.

2. Système (700) selon la revendication 1, où, dans la zone d'embarquement possible du véhicule, une plage de capture d'image de la caméra (300) prévue dans le véhicule appelé (100) et une plage de capture d'image d'une caméra (300) prévue dans le dispositif de fourniture de services de RA (800) sont comprises dans une plage de distance où le véhicule appelé (100) et le dispositif de fourniture de services de RA (800) sont aptes à une capture d'image réciproque.

3. Système (700) selon la revendication 1, où, au moment de l'appel du véhicule, la plateforme de services (900) est configurée pour transmettre des informations additionnelles, émises par le dispositif de fourniture de services de RA (800), au véhicule appelé (100), et permettre au véhicule appelé (100) d'extraire une zone relative aux informations additionnelles à partir d'une image capturée par la caméra (300) du véhicule appelé (100), et de générer la pluralité de miniatures, en y incluant la zone extraite.

4. Système (700) selon la revendication 1, où, en réaction à la sélection, le dispositif de fourniture de services de RA (800) est configuré pour remplacer une première image en RA, basée sur les informations de localisation et les informations relatives au véhicule appelé (100), par une deuxième image en RA, basée sur des informations de personnalisation du passager, et affiche la deuxième image en RA résultante dans le véhicule appelé (100).

5. Système (700) selon la revendication 1, où, en réaction à une sélection impossible appliquée à la pluralité de miniatures, la plateforme de services (900) est configurée pour transmettre une instruction de nouvelle capture d'image au véhicule appelé (100) et pour permettre au véhicule appelé (100) de fournir une miniature, correspondant à l'instruction de nouvelle capture d'image, au dispositif de fourniture de services de RA (800).

6. Système (700) selon la revendication 1, où, en réaction à la détermination par le véhicule appelé (100), en tant que résultat de comparaison, que la similitude entre les premières caractéristiques et les deuxièmes caractéristiques atteint ou dépasse une valeur de référence, la plateforme de services (900) est configurée pour permettre au véhicule appelé (100) d'effectuer une opération relative au guidage du passager lors de l'embarquement dans le véhicule.

7. Système (700) selon la revendication 1, où, en réaction à la détermination par le véhicule appelé (100), en tant que résultat de comparaison, que la similitude entre les premières caractéristiques et les deuxièmes caractéristiques n'atteint pas une valeur de référence, la plateforme de services (900) est configurée pour permettre au véhicule appelé (100) d'effectuer une opération relative à une non-concordance de passager, et pour transmettre des informations de guidage d'arrivée du véhicule au dispositif de fourniture de services de RA (800).

8. Procédé de fourniture d'un service de VTC, ledit procédé comprenant :
une étape d'acquisition d'informations de localisation d'un véhicule appelé (100) ;
une étape de restitution d'une image en réalité augmentée (RA), basée sur des informations de localisation et des informations relatives au véhicule appelé (100), vers le véhicule appelé (100) et d'affichage de l'image en RA résultante sur une carte tridimensionnelle ;
une étape de détermination que le véhicule appelé (100), vers lequel l'image en RA est restituée, pénètre dans une zone d'embarquement possible ;
une étape de demande au véhicule appelé (100) de capturer une image englobant une pluralité de passagers candidats, au moyen d'une caméra (300) dans le véhicule appelé (100), et de génération d'une pluralité de miniatures correspondant chacune à un passager candidat respectif ;
une étape de fourniture au dispositif de fourniture de services de RA (800) d'une interface d'utilisateur permettant de sélectionner une miniature parmi la pluralité de miniatures générées ; et
une étape de transmission au véhicule appelé (100) des informations relatives à la miniature sélectionnée par le dispositif de fourniture de services de RA (800), et d'autorisation de suivi de la localisation d'un passager candidat par le véhicule appelé (100),
**caractérisé en ce que**
l'étape de transmission au véhicule appelé (100) des informations relatives à la miniature sélectionnée par le dispositif de fourniture de services de RA (800) et d'autorisation de suivi de la localisation du passager candidat par le véhicule appelé (100) comprend :
une étape de transmission au véhicule appelé (100) d'un identifiant et de caractéristiques d'une miniature, sélectionnée via l'interface d'utilisateur ; et
une étape d'autorisation de reconnaissance par le véhicule appelé (100) d'un passager candidat correspondant à l'identifiant de miniature transmis, et de suivi de la localisation du passager candidat reconnu sur la base des caractéristiques,
ledit procédé comprenant en outre :
une étape de détection que le véhicule appelé (100) s'e ; et
une étape d'autorisation de comparaison par le véhicule appelé (100) de premières caractéristiques, correspondant à la miniature sélectionnée, avec des deuxièmes caractéristiques acquises à partir d'une image capturée du passager candidat s'approchant d'une porte du véhicule appelé (100), et d'exécution d'une authentification de passager.

9. Procédé selon la revendication 8, où l'étape de détermination que le véhicule appelé (100) pénètre dans la zone d'embarquement possible est une étape où il est déterminé que la plage de capture d'image de la caméra (300) prévue dans le véhicule appelé (100) et la plage de capture d'image d'une caméra prévue dans le dispositif de fourniture de services de RA (800) sont comprises dans une plage de distance où le véhicule appelé (100) et le dispositif de fourniture de services de RA (800) sont aptes à une capture d'image réciproque.

10. Procédé selon la revendication 8, où l'étape de demande de capture par le véhicule appelé d'une image englobant la pluralité de passagers candidats, au moyen de la caméra (300) du véhicule appelé (100), et de génération de la pluralité de miniatures comprend :
une étape de transmission d'informations additionnelles, émises par le dispositif de fourniture de services de RA (800), au véhicule appelé (100) au moment de l'appel du véhicule ; et
une étape d'autorisation d'extraction par le véhicule appelé (100) d'une zone relative aux informations additionnelles à partir d'une image capturée par la caméra (300) du véhicule appelé (100), et de génération de la pluralité de miniatures, en y incluant la zone extraite.

11. Procédé selon la revendication 8, comprenant en outre :
une étape de réception d'une entrée d'impossibilité de sélection, appliquée à la pluralité de miniatures via l'interface d'utilisateur ; et
une étape de transmission au véhicule appelé (100) d'une instruction de nouvelle capture d'image, et de nouvelle fourniture d'une miniature, correspondant à l'instruction de nouvelle capture d'image, au dispositif de fourniture de services de RA (800).
